# NEUE EUROPÄISCHE PATENTSCHRIFT

(11) **EP 2 305 524 B2**
(45) Veröffentlichungstag und Bekanntmachung des Hinweises auf die Entscheidung über den Einspruch: **12.04.2017**
(45) Hinweis auf die Patenterteilung: 09.05.2012
(21) Anmeldenummer: 10174896.0
(22) Anmeldetag: 01.09.2010
(51) Int. Cl.: B60T 13/58, B60T 8/17, B60T 13/68

(54) **Verfahren zum Betrieb einer Bremseinrichtung für ein hydraulisch gebremstes Zugfahrzeug**
Method for operating a braking device for a hydraulically braked towing vehicle
Procédé de fonctionnement d'un dispositif de freinage pour un véhicule de traction freiné de manière hydraulique

(30) Priorität: 30.09.2009 DE 102009045191
(43) Veröffentlichungstag der Anmeldung: 06.04.2011
(73) Patentinhaber: Haldex Brake Products GmbH, 69123 Heidelberg (DE)
(72) Erfinder: Maltry, Helmut, 69226, Nussloch (DE); Sulzyc, Georg, 68535, Edingen-Neckarhausen (DE)
(74) Vertreter: REHBERG HÜPPE + PARTNER

(56) Entgegenhaltungen:
- EP-A1- 2 269 880
- EP-B1- 0 832 803
- EP-B1- 2 165 901
- WO-A1-2007/008150
- DE-A1- 3 209 592
- DE-A1- 3 338 690
- DE-A1- 3 410 270
- DE-A1- 3 412 345
- DE-A1- 19 752 147
- DE-B4- 19 581 733
- DE-T2-602005 000 153

## Beschreibung

### TECHNISCHES GEBIET DER ERFINDUNG

Die Erfindung betrifft ein Verfahren zum Betrieb einer Bremseinrichtung für ein hydraulisch gebremstes Zugfahrzeug, insbesondere einen Traktor, welches oder welcher mit einem pneumatisch gebremsten Anhänger koppelbar ist.

### STAND DER TECHNIK

Wird ein hydraulisch gebremstes Zugfahrzeug, insbesondere ein Traktor, mit einem pneumatisch gebremsten Anhänger gekoppelt, muss über einen Kupplungskopf Bremse vom Zugfahrzeug an den Anhänger ein pneumatischer Bremsdruck übergeben werden, welcher korreliert mit einem hydraulischen Bremsdruck, der abhängig von der Betätigung eines Bremsbetätigungsorgans, insbesondere eines Bremspedals, durch den Fahrer erzeugt wird. Zu diesem Zweck finden in bekannten Bremseinrichtungen Anhängersteuerventile Einsatz, denen der hydraulische Bremsdruck zugeführt wird und welche je nach Größe des hydraulischen Bremsdrucks einen zugeordneten pneumatischen Bremsdruck erzeugen, der dann an den Kupplungskopf Bremse weitergegeben wird und in dem Anhänger für die Erzeugung einer Bremskraft genutzt wird.

In modernen Bremseinrichtungen mit hydraulischem Bremskreis sind die hydraulischen Bremsdrücke verhältnismäßig niedrig. Die Steuervolumina, die für ein Anhängersteuerventil verbraucht werden dürfen, sind stark eingeschränkt. Herkömmliche Pneumatikventile wie ein kombiniertes Einlass-Auslass-Ventil, welche zwischen einem Vorratsbehälter und einem Ausgangsanschluss für den pneumatischen Bremsdruck in einem Anhängersteuerventil vorgesehen sind, benötigen einen gewissen Schließ- und Öffnungshub, um die erforderlichen Öffnungsquerschnitte bereitzustellen. Dem Schließ- und Öffnungshub des Einlass-Auslass-Ventils entspricht aber auch der Hub eines pneumatischen Wiegekolbens des Anhängersteuerventils, der wiederum dem Hub eines zugeordneten hydraulischen Relaiskolbens entspricht. Auch die Öffnungskräfte am Ventilsitz des Einlass-Auslass-Ventils sind definiert, da diese entsprechend der Anforderungen an die Dichtheit des Einlass-Auslass-Ventils im gesamten Arbeitsbereich gewählt werden müssen. Aus den zuvor aufgelisteten Randbedingungen und einem infolge der baulichen Gegebenheiten vorgegebenen Durchmesser für den hydraulischen Relais- und Wiegekolben ergibt sich der Ansprechdruck oder Reaktionsdruck des Anhängersteuerventils. Hierbei bezeichnet der Ansprechdruck den hydraulischen Druck, bei welchem das Einlass-Auslass-Ventil erstmals eine Stellung verändert, insbesondere in seine Einlassstellung überführt wird, so dass es zu einer Aussteuerung eines pneumatischen Bremsdrucks am Ausgangsanschluss des Anhängersteuerventils kommt. Der Ansprechdruck liegt bei bekannten Bremseinrichtungen üblicherweise im Bereich von 2 - 4 bar oder sogar bis im Bereich von 4 bis 8 bar. Bei einem derartigen Ansprechdruck wird in dem hydraulischen Bremskreis des Zugfahrzeugs aber bereits eine Bremskraft erzeugt, während eine Abbremsung des Anhängers noch nicht erreicht worden ist. Dies hat die unerwünschte Folge, dass der Anhänger "aufläuft" und die gesamte Bremsarbeit sowohl für das Zugfahrzeug als auch für den Anhänger von der hydraulischen Bremsanlage des Zugfahrzeugs verrichtet wird.

DE 33 38 690 A1 beschäftigt sich mit der Forderung, dass bereits voreilend zu dem Aufbau eines hydraulischen Bremsdrucks für die Abbremsung des Zugfahrzeugs ein pneumatischer Bremsdruck für die Abbremsung des Anhängers erzeugt werden soll. Hierdurch soll das erläuterte Auflaufen des Anhängers mit dem Einsetzen der Bremskraft des Zugfahrzeugs infolge des hydraulischen Bremsdrucks vermieden werden - vielmehr soll durch die genannte Voreilung des pneumatischen Bremsdrucks der Zug aus dem Zugfahrzeug und dem Anhänger in gestrecktem Zustand gehalten werden. Zu diesem Zweck wird die Verbindung eines Ausgangsanschlusses des Anhängersteuerventils für den pneumatischen Bremsdruck einerseits mit einer Entlüftung und andererseits mit einem Druckluftvorrat über ein kombiniertes Einlass-Auslass-Ventil gesteuert, dessen Ein- und Auslassstellung durch einen Wiegekolben gesteuert wird. Die Kraftverhältnisse an dem Wiegekolben können über zwei getrennte Steuerkreise beeinflusst werden: In einem ersten Steuerkreis wird in einem hydraulischen Druckraum eine erste Kolbenfläche mit dem hydraulischen Bremsdruck beaufschlagt. Eine durch den hydraulischen Bremsdruck erzeugte Verschiebung und Kraftbeaufschlagung der ersten Kolbenfläche wird über eine Art Relaiskolben oder Stößel übertragen auf den Wiegekolben. Weiterhin ist ein zweiter Steuerkreis vorgesehen, bei dem in einem pneumatischen Druckraum eine zweite Kolbenfläche pneumatisch beaufschlagbar ist. Eine an der zweiten Kolbenfläche erzeugte Kraft sowie Verschiebung wird über einen weiteren Relaiskolben oder Stößel auf den Wiegekolben übertragen. Die parallele Kraft- und Wegübertragung von den beiden Kolbenflächen über die zugeordneten Relaiskolben erfolgt gemäß der Druckschrift über eine koaxiale, teleskopartige Anordnung der Relaiskolben, die jeweils mit einer den Druckräumen gegenüberliegenden Stirnfläche zur Anlage an den Wiegekolben kommen können. Der Pneumatikdruck, mit welchem der pneumatische Druckraum und die zweite Kolbenfläche beauftragt wird, wird diesem Druckraum von dem Vorratsbehälter des Zugfahrzeugs über ein 3/2-Wegeventil mit einer Be- und Entlüftungsstellung zugeführt, wobei das 3/2-Wegeventil über einen Stößel derart mit dem Bremspedal gekoppelt ist, dass dieses bereits bei einer geringfügigen Betätigung des Bremspedals von seiner Entlüftungsstellung in seine Belüftungsstellung überführt wird. Mit einsetzender Betätigung des Bremspedals, also kleinem Weg des Bremspedals, wird somit die zweite Kolbenfläche pneumatisch beaufschlagt, was zur Folge hat, dass der Wiegekolben derart beaufschlagt wird, dass das Einlass-Auslass-Ventil aus seiner Auslassstellung in eine (geringfügige geöffnete) Einlassstellung überführt wird, in der bereits Druckluft aus einem Vorratsbehälter zu dem Ausgangsanschluss für den pneumatischen Bremsdruck gelangen kann. Mit Vergrößerung des Weges des Bremspedals wird der hydraulische Bremszylinder vollständig geöffnet, so dass in dem hydraulischen Druckraum der Hydraulikdruck auf die erste Kolbenfläche einwirkt. Mit Hilfe dieser ergänzenden, hydraulisch verursachten Betätigungskraft werden die Kraftverhältnisse an dem Wiegekolben derart verändert, dass das Einlass-Auslass-Ventil noch weiter in seine Öffnungsstellung verbracht wird, so dass entsprechend der Vorgabe für den hydraulischen Bremsdruck ein vergrößerter pneumatischer Bremsdruck an den zugeordneten Ausgangsanschluss des Anhängersteuerventils weitergegeben wird. Hat sich an dem Ausgangsanschluss sowie dem Wiegekolben ein hinreichend großer pneumatischer Bremsdruck aufgebaut, wirkt dieser an dem Wiegekolben dem an der ersten Kolbenfläche wirkenden hydraulischen Bremsdruck sowie dem an der zweiten Kolbenfläche wirkenden pneumatischen Bremsdruck entgegen, so dass das Einlass-Auslass-Ventil in seine Schließstellung gelangen kann, womit eine Bremsabschlussstellung erreicht ist. Letztendlich basiert die Voreilung des pneumatischen Bremsdrucks an den Ausgangsanschluss des Anhänger-steuerventils darauf, dass unmittelbar mit Betätigung des Bremspedals der Druck des Vorratsbehälters über das 3/2-Wegeventil dem zweiten pneumatischen Druckraum zugeführt wird.

Auch DE 34 123 45 A1 beschäftigt sich mit der Aufgabe, eine Voreilung der pneumatischen Bremsung des Anhängers gegenüber der hydraulischen Bremsung des Zugfahrzeugs zu erzielen, um ein Auflaufen des Anhängers zu vermeiden. Hier besteht die Lösung darin, dass der Weg des Betätigungsorgans oder Bremspedals bzw. des hydraulischen (Haupt-) Bremszylinders über einen elektrischen Schalter überwacht wird. Für einen verhältnismäßig kurzen Weg, für den über den Bremszylinder noch kein oder noch kein ausweichender hydraulischer Bremsdruck erzeugt wird, wird der elektrische Schalter betätigt, was zur Folge hat, dass ein Magnetventil in eine Öffnungsstellung überführt wird, in der eine zweite Kolbenfläche, die zusätzlich zu einer ersten Kolbenfläche, die von dem hydraulischen Bremsdruck beaufschlagt wird, auf einen Wiegekolben wirkt, mit einem Pneumatikdruck beaufschlagt ist. Hierdurch kann die gewünschte Voreilung erzielt werden.

Aus der nicht vorveröffentlichten Patentanmeldung DE 10 2008 048208.0-21 ist eine Bremseinrichtung bekannt, bei welcher der pneumatische Bremsdruck einerseits über ein herkömmliches Anhängersteuerventil über einen hydraulisch-pneumatischen Bremskreis und andererseits über einen elektro-pneumatischem Bremskreis erzeugt werden kann. Grundsätzlich erfolgt die Erzeugung des pneumatischen Bremsdrucks auf herkömmliche Weise über das Anhängersteuerventil. In ausgewählten Betriebsbereichen, beispielsweise während des Ansprechbereiches des hydraulischen Bremskreises mit einem hydraulischen Bremsdruck unterhalb des Ansprechdrucks, kann allerdings dem elektro-pneumatischen Bremskreis über einer Steuereinheit Vorrang eingeräumt werden, indem die Erzeugung des pneumatischen Bremsdrucks in dem hydraulisch-pneumatischen Bremskreis über das Anhängersteuerventils "überbrückt" wird und der pneumatische Bremsdruck ausschließlich über den elektro-pneumatischen Bremskreis erzeugt wird. In dem elektro-pneumatischen Bremskreis kann beispielsweise das Signal eines Sensors verwendet werden, welches die Bewegung des Bremspedals erfasst und zu Beginn eines über das Bremspedal eingeleiteten Bremsvorgangs zunächst den elektro-pneumatischen Bremskreis aktiviert. Ebenfalls möglich ist die Berücksichtigung eines Signals eines Sensors, der den hydraulischen Bremsdruck, einen hydraulischen Bremsbetätigungsweg, ein Bremsverzögerungssignal oder ähnliches erfasst. Da eine derartige Bremseinrichtung sowohl einen vollständigen elektro-pneumatischen Bremskreis als auch einen hydraulisch-pneumatischen Bremskreis erfordert, besitzt eine derartige Lösung den Nachteil einer verhältnismäßig hohen Komplexität und hoher Kosten.

EP 0 832 803 B1 offenbart ein Anhängersteuerventil, bei welchem der das Einlass-Auslass-Ventil betätigende Wiegekolben über drei Kolbenflächen eines Relaiskolbens mit drei zugeordneten Druckräumen betätigbar ist. Die ersten beiden Druckräume werden hierbei mit einem hydraulischen Bremsdruck unterschiedlicher Betriebsbremskreise beaufschlagt. Der dritte Druckraum mit zugeordneter Kolbenfläche kann unabhängig von der hydraulischen Beaufschlagung der anderen Druckräume pneumatisch beaufschlagt werden. Der Pneumatikdruck in diesem dritten Druckraum wird gesteuert über ein zwischen den dritten Druckraum und einen Vorratsbehälter zwischengeschaltetes Steuerventil, welches im einfachsten Fall als elektromagnetisch angesteuertes 3/2-Wegeventil ausgebildet ist. Dieses Steuerventil kann drosselnd oder nicht drosselnd ausgebildet sein und kann zwischen einer Öffnungsstellung sowie einer Schließstellung beliebige Zwischenstellungen einnehmen, so dass je nach Stellung eine abstufbare Bremsung des Anhängers herbeiführbar ist, indem über das Steuerventil in dem dritten Druckraum ein Pneumatikdruck zwischen 0 bar und dem Vorratsdruck einsteuerbar ist. Eine Betätigung des Steuerventils erfolgt durch mechanische Kopplung mit einem Feststellbremshebel, wobei für nicht betätigten Feststellbremshebel das Steuerventil seine Entlüftungsstellung einnimmt, so dass das Anhängersteuerventil keinen Druck für die Kupplungskopf Bremse aussteuert, während das Steuerventil für betätigten Feststellbremshebel seine Belüftungsstellung einnimmt, so dass ein pneumatischer Bremsdruck für die Kupplungskopf Bremse ausgesteuert wird.

Weiterer Stand der Technik ist aus DE 39 18 226 C2 und DE 32 09 592 A1 bekannt.

### AUFGABE DER ERFINDUNG

Der Erfindung liegt die Aufgabe zugrunde, ein Verfahren zum Betrieb einer Bremseinrichtung für ein hydraulisch gebremstes Zugfahrzeug, welches mit einem pneumatisch gebremsten Anhänger koppelbar ist, vorzuschlagen, welches bei einfacher und dennoch zuverlässiger Ausgestaltung verbesserte Steuerungs- und Regelungsmöglichkeiten für einen pneumatischen Bremsdruck am Ausgangsanschluss eines Anhängersteuerventils zur Verfügung stellt. Insbesondere sollen Verzögerungen infolge eines Ansprechdruckes des hydraulischen Bremssprechdrucks mittels eines Pneumatikdrucks eine Aussteuerung eines pneumatischen Bremsdrucks durch das Anhängersteuerventil erfolgt.

### LÖSUNG

Die Aufgabe der Erfindung wird erfindungsgemäß mit den Merkmalen des unabhängigen Patentanspruchs 1 gelöst. Weitere Ausgestaltungen des erfindungsgemäßen Verfahrens ergeben sich entsprechend den abhängigen Patentansprüchen.

### BESCHREIBUNG DER ERFINDUNG

Die vorliegende Erfindung beruht auf der Erkenntnis, dass für die aus DE 33 38 690 A1 und DE 34 12 345 A1 bekannten Lösungen für hydraulische Bremsdrücke unterhalb des Ansprechdrucks der Pneumatikdruck, der in dem Anhängersteuerventil eine Herbeiführung einer Einlassstellung des Einlass-Ventils bzw. eines kombinierten Einlass-Auslass-Ventils gewährleisten soll, dem Druck in einem Vorratsbehälter der Bremseinrichtung entspricht. Da aber betriebbedingt der Druck in dem Vorratsbehälter, beispielsweise um 0,6 - 1,2 bar schwankt, verhält sich auf nicht beherrschbare Weise das Anhängerbremsventil für unterschiedliche Bremsungen unterschiedlich. Möglich ist, dass für diese Ausführungsformen ein vorgesteuerter Pneumatikdruck nach einer fest vorgegebenen Zeitspanne der Öffnung des Einlass-Ventils unterschiedliche Endwerte erreicht. Andererseits wirkt der Druck des Vorratsbehälters als Pneumatikdruck in dem Anhängersteuerventil unabhängig davon, in welchem Fahrzeug oder Bremseinrichtung das Anhängersteuerventil eingesetzt ist. Anpassungen an andere Fahrzeuge erfordern konstruktive Änderungen des Anhängersteuerventils oder weitere Bauelemente der Bremseinrichtung. Schließlich wirkt der dem Vorratsbehälter entstammende Pneumatikdruck in dem Anhängersteuerventil unabhängig davon, ob das Zugfahrzeug und/oder der Anhänger be- oder entladen ist/sind. Ist aber eine Dimensionierung der mit dem Pneumatikdruck beaufschlagten Kolbenfläche sowie der weiteren Bauelemente des Anhängersteuerventils ausgelegt auf die maximale Beladung insbesondere des Anhängers, kann der dem Vorratsbehälter entstammende Pneumatikdruck zu einem ausgesteuerten pneumatischen Bremsdruck führen, der schlimmstenfalls zu einem Blockieren der gebremsten Räder des Anhängers führen kann.

Erfindungsgemäß ist zunächst ein Bremsbetätigungsorgan vorgesehen, welches zur Erzeugung eines hydraulischen Bremsdrucks für eine hydraulische Betriebsbremse des Zugfahrzeugs betätigt wird. Im einfachsten Fall handelt sich bei einem derartigen Bremsbetätigungsorgan um ein Bremspedal, während beliebige anderweitige Bremsbetätigungsorgane ebenfalls im Rahmen der Erfindung einsetzbar sind, beispielsweise ein Bremsschalter oder eine Steuereinheit, über die automatisiert ein hydraulischer Bremsdruck für eine hydraulische Betriebsbremse des Zugfahrzeugs, beispielsweise in einer Gefahrensituation, erzeugt werden kann.

Weiterhin sieht die Erfindung ein Anhängersteuerventil vor. In dem Anhängersteuerventil wird eine erste Kolbenfläche mit dem hydraulischen Bremsdruck beaufschlagt. Überschreitet in dem Anhängersteuerventil der hydraulische Bremsdruck den zuvor erläuterten Ansprechdruck, wird in dem Anhängersteuerventil in Abhängigkeit der Beaufschlagung der ersten Kolbenfläche mit dem hydraulischen Bremsdruck ein Einlass-Ventil geöffnet, welches auch Teil eines kombinierten Einlass-Auslass-Ventils (vgl. den eingangs erläuterten Stand der Technik) sein kann. Das Einlass-Ventil kann beispielsweise den Ausgangsanschluss des Anhängersteuerventils in geöffneter Stellung mit einer Druckluftquelle, beispielsweise dem Vorratsbehälter verbinden. Hierdurch wird an dem Ausgangsanschluss des Anhängersteuerventils ein pneumatischer Bremsdruck erzeugt, der einem Kupplungskopf Bremse zugeführt wird, welcher in an sich bekannter Weise für die pneumatische Kopplung mit einem Anhänger bestimmt ist.

Für eine Beeinflussung des Ansprechverhaltens des Anhängersteuerventils sowie des pneumatischen Bremskreises des Anhängers ist weiterhin erfindungsgemäß ein pneumatisches Ventil vorgesehen, wobei dieses "Ventils" ein einzelnes Ventil oder eine Ventilbaugruppe in Ausbildung als eine Einheit oder in verteilter Ausbildung in beliebiger Ausgestaltung der beteiligten pneumatischen Elemente und etwaiger Aktuatoren sein kann. Dieses Ventil kann mit Betätigung des Betätigungsorgans, aber bereits vor Erreichen des Ansprechdrucks, in eine Ventilstellung überführt werden, in der von dem pneumatischen Ventil ein Pneumatikdruck an eine zweite Kolbenfläche des Anhängersteuerventils weitergeleitet wird. Durch Beaufschlagung der zweiten Kolbenfläche wird das Einlass-Ventil zumindest teilweise geöffnet, wodurch an einem Ausgangsanschluss des Anhängersteuerventils bereits ein pneumatischer Bremsdruck erzeugt werden kann, bevor der Ansprechdruck erreicht worden ist.

Erfindungsgemäß wird insbesondere abweichend zu DE 33 38 690 A1 und DE 34 12 345 A1 die zweite Kolbenfläche nicht mit einem unbeeinflussten Pneumatikdruck, beispielsweise dem Druck des Vorratsbehälters beaufschlagt. Vielmehr wird erfindungsgemäß der zeitliche Verlauf und/oder der Betrag der Beaufschlagung der zweiten Kolbenfläche mit dem Pneumatikdruck im Fahrbetrieb, also nicht in einer Feststellbremssituation, in Abhängigkeit von Fahrbetriebsparametern gesteuert oder geregelt. Bei den Fahrbetriebsparametern kann es sich um beliebige Parameter handeln, die nicht mit einer Feststellbremssituation verbunden sind. Um lediglich einige Beispiele zu nennen kann es sich bei dem "Fahrbetriebsparameter", den die Steuerung oder Regelung berücksichtigt, um eine Beladung, eine Geschwindigkeit oder Drehzahl eines Elements des Antriebsstrangs, eine Bewegungsgröße eines Rades, eine Bremskraft, eine Beschleunigung, ein Koppelkraftsignal, einen Fahrerwunsch, ein Bremspedalsignal, eine Traktion, einen Fahrbahn- oder Umgebungsparameter, einen pneumatischen Bremsdruck, einen hydraulischen Bremsdruck und/oder einen Zustand einer Luftfederung u. ä. handeln, wobei der Fahrbetriebsparameter das Zugfahrzeug und/oder den Anhänger betreffen kann. Neben einer Einfachen Steuerung kann auch die Rückführung einer Größe, die mit dem Fahrbetriebsparameter zusammenhängt, erfolgen, die dann im Rahmen einer Regelung Berücksichtigung findet

Möglich ist auch die Integration des erfindungsgemäßen Verfahrens in die eingangs erläuterten Ausführungsformen gemäß dem Stand der Technik, wobei zur Ausbildung der beiden Kolbenflächen ein einziger, beispielsweise gestufter Relaiskolben oder auch mehrere, u. U. auch teleskopartig ineinandergeschachtelte Relaiskolben eingesetzt werden können. Es versteht sich, dass die Erfindung gleichermaßen einsetzbar ist für einen ein- und mehrkreisigen hydraulischen Bremskreis.

In weiterer Ausgestaltung der Erfindung erfolgt die Steuerung oder Regelung unter Berücksichtung eines Signals, welches von der Betätigung des Bremsbetätigungsorgans und/oder dem pneumatischen Bremsdruck (unmittelbar oder mittelbar) abhängig ist. Um lediglich einige Beispiele für eine derartige Berücksichtigung zu nennen, kann über das Signal zunächst die Beaufschlagung der zweiten Kolbenfläche mit dem Pneumatikdruck "getriggert" werden, so dass beispielsweise mit dem Überschreiten eines Schwellwerts des Signals überhaupt ein Pneumatikdruck freigegeben wird. Alternativ oder kumulativ ist es möglich, dass ein Betrag des Signals, ein Kurvenverlauf, eine zeitliche Änderung des Signals oder eine Zeitdauer des Signals Berücksichtigung findet. Möglich ist, dass, beispielsweise über einen Wegsensor, einen Tastschalter, einen Winkelsensor oder ähnliches unmittelbar die Betätigung des Bremsbetätigungsorgans erfasst wird. Mittelbar von der Betätigung des Bremsbetätigungsorgans abhängig und damit über ein Signal erfasst werden kann aber auch der hydraulische Bremsdruck und/oder ein Betätigungsweg eines (Haupt-)Bremszylinders. Neben diesen oder anderen Erfassungsmöglichkeiten für ein Signal auf "der Eingangsseite" des Anhängersteuerventils kann das berücksichtigte Signal auch "ausgangsseitig" des Anhängersteuerventils erfasst werden, indem beispielsweise das Signal mit dem dem Kupplungskopf Bremse zugeordneten pneumatischen Bremsdruck korreliert.

Ebenfalls von der Steuerung und Regelung berücksichtigt werden können die Einbaubedingungen und die Ausgestaltung der Bremseinrichtung selbst, so dass eine Steuerung oder Regelung je nach vorhandenen Komponenten der Bremseinrichtung erfolgen kann. Möglich ist bspw., dass in einer Steuereinheit ein Kennfeld vorhanden ist, welches die unterschiedlichen möglichen Komponentenkombinationen abbildet.

Die bedarfsabhängige Steuerung oder Regelung kann für eine weitere Ausgestaltung der Erfindung darin bestehen, dass abhängig von Fahrbetriebsbedingungen die Dauer des Pneumatikdrucks, der die zweite Kolbenfläche beaufschlagt, gesteuert oder geregelt wird.

Gemäß einer weiteren Ausführungsform der Erfindung erfolgt die Steuerung oder Regelung des Pneumatikdrucks abhängig von Fahrbetriebsbedingungen unter Berücksichtigung eines Vergleichs des hydraulischen Bremsdrucks des Zugfahrzeugs und des von dem Anhängersteuerventil aus gesteuerten pneumatischen Bremsdrucks für den Anhänger. Aus einem derartigen Vergleich lässt sich ermitteln, inwieweit der von dem Anhängersteuerventil ausgesteuerte pneumatische Bremsdruck mit dem Wunsch des Fahrers, der sich unmittelbar oder mittelbar in dem hydraulischen Bremsdruck widerspiegelt, angenähert hat. Wird aus dem genannten Vergleich beispielsweise ermittelt, dass der pneumatische Bremsdruck im Vergleich zu dem Wunsch des Fahrers zu niedrig ist, kann die Steuerung oder Regelung den Pneumatikdruck erhöhen.

Für eine andere Ausführungsform erfolgt für die Steuerung oder Regelung des Pneumatikdrucks abhängig von Fahrbetriebsbedingungen ein Vergleich der hydraulisch erzeugten Bremskraft des Zugfahrzeugs und der pneumatisch erzeugten Bremskraft des Anhängers. Oftmals liegen die erzeugten Bremskräfte bereits in einer Steuereinheit vor, so dass aus einem Vergleich der Bremskraft des Zugfahrzeugs und der Bremskraft des Anhängers bereits darauf geschlossen werden kann, ob der Anhänger auf das Zugfahrzeug "aufläuft" oder nicht. Im erstgenannten Fall kann die Regelung oder Steuerung den Pneumatikdrucks derart erhöhen, dass eine Erhöhung des pneumatischen Bremsdrucks erfolgt und damit die pneumatisch erzeugte Bremskraft ebenfalls erhöht wird. Ebenfalls möglich ist, dass die Steuerung oder Regelung des Pneumatikdrucks abhängig von Fahrbetriebsbedingungen unter Berücksichtung der Beladung des Zugfahrzeugs und/oder des Anhängers erfolgt. Für die Steuerung oder Regelung der Pneumatikkraft abhängig von Fahrbetriebsbedingungen kann auch die Berücksichtung von Informationen einer ABS- oder EBS-Einheit erfolgen. In derartigen Einheiten liegen ohnehin vielfältige Informationen, beispielsweise hinsichtlich der Beladung, der Traktion, der erzeugten Bremskraft, der Bremsverzögerung des Fahrzeugs und ähnliches vor, so dass diese Informationen multifunktional auch für die Steuerung oder Regelung des Pneumatikdrucks genutzt werden können. Ebenfalls möglich ist, dass für die Steuerung oder Regelung des Pneumatikdrucks abhängig von Fahrbetriebsbedingungen Informationen eines Navigationssystems ausgewertet werden. Beispielsweise kann über das Navigationssystem eine Fahrbahnneigung ermittelt werden, aus welcher wiederum eine Hangabtriebskraft ermittelt werden kann, die für die Ermittlung, ob ein Auflaufen des Anhängers auf das Zugfahrzeug erfolgt, von entscheidender Bedeutung ist.

Eine besonders effiziente Gestaltung der Steuerung oder Regelung des Pneumatikdrucks kann erfolgen, wenn die Steuerung oder Regelung eine Kopplungskraft zwischen Zugfahrzeug und Anhänger berücksichtigt, die beispielsweise über einen Kopplungskraftsensor zwischen Zugfahrzeug und Anhänger erfasst wird und somit unmittelbaren Aufschluss darüber gibt, ob
- für konstantes Kraftniveau der Kopplungskraft Zugfahrzeug und Anhänger gleichermaßen beschleunigt oder gebremst werden, so dass der richtige pneumatische Bremsdruck und damit auch Pneumatikdruck ausgesteuert wird,
- mit einer Verringerung der Kopplungskraft zwischen Zugfahrzeug und Anhänger indiziert ist, dass der Anhänger weniger stark abgebremst wird als das Zugfahrzeug, so dass der ausgesteuerte pneumatische Bremsdruck und damit auch Pneumatikdruck erhöht werden muss, und
- mit einer Erhöhung der Kopplungskraft indiziert, dass der Anhänger stärker abgebremst wird als das Zugfahrzeug so dass der ausgesteuerte pneumatische Bremsdruck und damit auch Pneumatikdruck verringert werden muss.

Auch andere Auswertungsmöglichkeiten für das Ausgangssignal eines Kopplungskraftsensors, beispielsweise die Berücksichtigung von zeitlichen Änderungen des Ausgangssignals sind möglich. Es versteht sich, dass anstelle eines Kraftsensors für eine elastische Kopplung auch ein Kopplungswegsensor eingesetzt werden kann.

Ebenfalls möglich ist, dass die Steuerung oder Regelung des Pneumatikdrucks einen Betätigungsverlauf der Betätigung des Betätigungsorgans berücksichtigt. Beispielsweise kann aus einer sehr schnellen Betätigung des Bremsbetätigungsorgans auf eine starke Bremsung oder Notbremsung geschlossen werden, die unter Umständen eine Aussteuerung eines erhöhten pneumatischen Bremsdrucks erforderlich macht, dem durch eine Erhöhung des Pneumatikdrucks oder eine längere Einwirkdauer des Pneumatikdrucks durch die Steuerung oder Regelung Rechnung getragen werden kann.

Ebenfalls möglich ist, dass die bedarfsabhängige Steuerung oder Regelung für den Pneumatikdruck ein Geschwindigkeits- oder Beschleunigungssignal berücksichtigt oder einen Vergleich derselben für den Anhänger und das Zugfahrzeug.

Auch möglich ist, dass infolge der Steuerung oder Regelung des Pneumatikdrucks erfindungsgemäß eine Beendigung der Beaufschlagung der zweiten Kolbenfläche mit dem Pneumatikdruck automatisiert erfolgt, wenn ein Beendigungskriterium erreicht ist. Mit einer derartigen Beendigung der Beaufschlagung der zweiten Kolbenfläche mit dem Pneumatikdruck wird beispielsweise ein Einlass-Auslass-Ventil in seine Auslassstellung überführt, so dass der dem zweiten Kolbenfläche zugeordnete Druckraum entlüftet wird. Hiermit kann die Steuerung für den pneumatischen Bremsdruck ausschließlich auf den hydraulischen Bremsdruck übergeben werden, der an der ersten Kolbenfläche (und ggf. weiteren Kolbenflächen) wirkt, womit dann eine gewünschte Abhängigkeit zwischen dem hydraulischen Bremsdruck und dem pneumatischen Bremsdruck erzielt werden kann. Für das genannte Beendigungskriterium gibt es vielfältige Möglichkeiten. Um lediglich einige Beispiele zu nennen kann das Beendigungskriterium den Verlauf des pneumatischen und/oder des hydraulischen Bremsdrucks berücksichtigen. Beispielsweise das Beendigungskriterium auch sein, dass der hydraulische Bremsdruck den Ansprechdruck erreicht oder einen Druck erreicht, der um einen vorgegeben Druck von dem Ansprechdruck abweicht. Beliebige weitere Berücksichtungen des Verlaufes des hydraulischen Bremsdruckes sind ebenfalls denkbar, beispielsweise eine Verringerung des Anstiegs des hydraulischen Bremsdruckes, woraus ablesbar sein kann, dass der Wunsch des Fahrers nach größerer oder fortgesetzter Bremsung nicht mehr existiert.

Ebenfalls möglich ist im Rahmen der vorliegenden Erfindung, dass als Beendigungskriterium der Verlauf der pneumatisch erzeugten Bremskraft des Anhängers und/oder der hydraulisch erzeugten Bremskraft des Zugfahrzeugs verwendet wird. Beispielsweise kann die Beaufschlagung der zweiten Kolbenfläche mit dem Pneumatikdruck beendet werden, wenn die Bremskraft einen Schwellwert überschreitet.

Als weiteres Beendigungskriterium kann die Zeitdauer der Betätigung des Bremsbetätigungsorgans ausgewertet werden. Ebenfalls möglich ist, dass das Beendigungskriterium abhängig ist von einer Beladung des Zugfahrzeugs und/oder des Anhängers, wobei beispielsweise für eine höhere Beladung des Zugfahrzeugs eine spätere Beendigung der Beaufschlagung der zweiten Kolbenfläche mit dem Pneumatikdruck erfolgen kann.

Weiterhin möglich ist, dass für das Beendigungskriterium die Kopplungskraft zwischen Zugfahrzeug und Anhänger berücksichtigt wird. Signalisiert beispielsweise ein Kopplungskraftsensor, dass mit Überschreiten des Ansprechdrucks und ansteigendem hydraulischen Bremsdruck infolge der Addition der Wirkungen des hydraulischen Bremsdrucks an der ersten Kolbenfläche sowie des Pneumatikdrucks an der zweiten Kolbenfläche der pneumatische Bremsdruck so groß ist, dass der Anhänger stärker abgebremst wird, als das Zugfahrzeug, kann die pneumatische Beaufschlagung der zweiten Kolbenfläche mit dem Pneumatikdruck beendet werden.

Ebenfalls möglich ist die Berücksichtigung des Betätigungsverlaufes der Betätigung des Bremsbetätigungsorgans als Beendigungskriterium.

Weiterhin möglich ist die Berücksichtigung von Informationen einer ABS- oder EBS-Einheit für das Beendigungskriterium, von Informationen eines Navigationssystems und/oder eines Geschwindigkeits- oder Beschleunigungssignals.

Im Rahmen der zuvor erläuterten Steuerungs- und Regelungsmaßnahmen kann erfindungsgemäß ein Drucksensor eingesetzt werden, der (unmittelbar oder mittelbar) den die zweiten Kolbenfläche beaufschlagenden Pneumatikdruck erfasst. Beispielsweise kann der Drucksensor unmittelbar dem der zweiten Kolbenfläche zugeordneten Druckraum zugeordnet sein. Ebenfalls möglich ist, dass der Drucksensor den Druck in einer Zuführleitung zu dem der zweiten Kolbenfläche zugeordneten Druckraum angeordnet ist.

Für eine weitere Ausgestaltung des erfindungsgemäßen Verfahrens wird über einen Drucksensor der von dem Anhängersteuerventil ausgesteuerte pneumatische Bremsdruck erfasst. Dieses kann beispielsweise in einer Verbindungsleitung zwischen dem Kupplungskopf Bremse und dem Ausgangsanschluss des Anhängersteuerventils erfolgen, am Kopplungskopf Bremse oder in dem Bremskreis des Anhängers selbst.

Für einen weiteren Vorschlag der Erfindung wird das Ausmaß der Beaufschlagung der zweiten Kolbenfläche mit dem Pneumatikdruck unter Einsatz eines einstellbaren Druckbegrenzungsventils gesteuert oder geregelt. Über das Druckbegrenzungsventil kann das Maximum des Pneumatikdrucks vorgegeben werden.

Das Druckbegrenzungsventil kann hierbei in weiterer Ausgestaltung der Erfindung auch während des Betriebs des Zugfahrzeugs einstellbar sein, beispielsweise über eine geeignete Steuereinheit, um den maximalen Pneumatikdruck bedarfsgerecht einzuregeln. Möglich ist auch, dass über die Einstellung des Maximaldrucks des Druckbegrenzungsventils eine Anpassung der Bremseinrichtung an unterschiedliche Zugfahrzeuge und/oder Anhänger erfolgt. Beispielsweise kann über die Einstellung eine Anpassung an eine manuelle Bremskraftreglung, eine automatische Bremskraftregelung oder eine elektronische Bremskraftregelung erfolgen mit den jeweils individuellen zugeordneten Druckeinsprüngen, so dass dieselbe erfindungsgemäße Kombination eines einstellbaren Druckbegrenzungsventils und eines Anhängersteuerventils für unterschiedliche Einbausituationen benutzt werden kann.

In weiterer Ausgestaltung der Erfindung erfolgt die Beaufschlagung der zweiten Kolbenfläche mit dem Pneumatikdruck über ein 2/2-Wege-Magnetventil, dem ein 3/2-Wege-Magnetventil nachgeordnet ist. Derartige Magnetventile sind vielfältig und zu geringen Kosten zu beziehen und sind dauerhaft bei einfachen Ansteuerungsmöglichkeiten betreibbar. Diese Ventilkombination ermöglicht die drei erforderlichen Betriebsstellungen je nach elektrischer Ansteuerung der Magnetventile: Eine Entlüftungsstellung, in welcher die Beaufschlagung der zweiten Kolbenfläche verringert oder beseitigt wird, eine Sperrstellung, in welcher die Beaufschlagung der zweiten Kolbenfläche konstant gehalten wird sowie eine Belüftungsstellung, in welcher der die zweite Kolbenfläche beaufschlagende Pneumatikdruck erhöht wird.

In weiterer Ausgestaltung der Erfindung ist in einem Druckbegrenzungsventil ein Stellkolben vorgesehen. Der Stellkolben wird sowohl mit dem Pneumatikdruck beaufschlagt, der der zweiten Kolbenfläche zugeführt wird, als auch (in entgegengesetzter Wirkrichtung) mit dem von dem Anhängersteuerventil ausgesteuerten pneumatischen Bremsdruck. Ein derartiges Druckbegrenzungsventil kann dann derart ausgestaltet sein, dass zunächst mit dem auf die zweite Kolbenfläche einwirkenden Pneumatikdruck, aber noch geringem oder keinem ausgesteuerten pneumatischen Bremsdruck das Druckbegrenzungsventil eine Öffnungsstellung einnimmt. Hingegen kann das Druckbegrenzungsventil in eine Absperrstellung verbracht werden, wenn der ausgesteuerte pneumatische Bremsdruck eine Sollgröße erreicht. Hierdurch ergibt sich eine besonders exakte Einstellung der Vorsteuerung, die insbesondere unabhängig sein kann von dem Druck in dem Vorratsbehälter.

Durchaus möglich ist, dass die Beaufschlagung der zweiten Kolbenfläche mit dem Pneumatikdruck lediglich während der Anfangsphase eines eingeleiteten Bremsvorgangs erfolgt, vorzugsweise bis zum Erreichen des Ansprechdrucks oder nach diesem Erreichen. In weiterer Ausgestaltung der Erfindung ist es allerdings auch möglich, dass die Beaufschlagung der zweiten Kolbenfläche mit dem Pneumatikdruck auch in anderweitigen Betriebsphasen benutzt wird, um eine Veränderung des pneumatischen Bremsdrucks gegenüber der über den hydraulischen Bremsdruck vorgegebenen Abhängigkeit herbeizuführen. In diesem Fall ergibt sich auch in diesen anderen Betriebszuständen ein pneumatischer Bremsdruck, der nicht allein von der Betätigung des Betätigungsorgans und/oder dem hydraulischen Bremsdruck anhängig ist, sondern von der Überlagerung der pneumatischen Beaufschlagung der zweiten Kolbenfläche mit dem Pneumatikdruck sowie der ersten Kolbenfläche mit dem hydraulischen Bremsdruck.

Für eine weitere Lösung der der Erfindung zugrunde liegenden Aufgabe erfolgt die Beaufschlagung der zweiten Kolbenfläche mit dem Pneumatikdruck ausschließlich oder auch ohne Vorliegen einer Betätigung des Betätigungsorgans, also auch ohne einen expliziten über das Betätigungsorgan vorgegebenen Bremswunsch des Fahrers. In einem derartigen Fall wird der Pneumatikdruck derart geregelt oder gesteuert, dass von dem Anhängersteuerventil ein pneumatischer Bremsdruck ausgesteuert wird, der von dem wirksamen Schleppmoments des Zugfahrzeugs abhängig ist. Befindet sich beispielsweise das Zugfahrzeug in einem Schubbetrieb oder entsteht eine Bremswirkung infolge eines Schleppmoments in einem Getriebe, würde dies ohne die erfindungsgemäße Ausgestaltung dazu führen, dass das Zugfahrzeug mit dem Schleppmoment gebremst ist, während der Anhänger nicht gebremst ist und somit auf das Zugfahrzeug aufläuft. Durch geeignete Steuerung oder Regelung des Pneumatikdrucks kann der Anhänger gerade so abgebremst werden, dass das Bremsmoment des Anhängers dem Schleppmoment des Zugfahrzeuges, beispielsweise infolge eines automatischen Getriebes, entspricht.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch eine Bremseinrichtung gemäß dem Stand der Technik.
- **Fig. 2 bis Fig. 13**: zeigen mit dem erfindungsgemäßen Verfahren betreibbare Bremseinrichtungen in schematischer Darstellung.
- **Fig. 14**: zeigt eine Kennlinie des ausgesteuerten pneumatischen Bremsdruckes über dem hydraulischen Bremsdruck, die sich bei Durchführung des erfindungsgemäßen Verfahrens ergibt.

### FIGURENBESCHREIBUNG

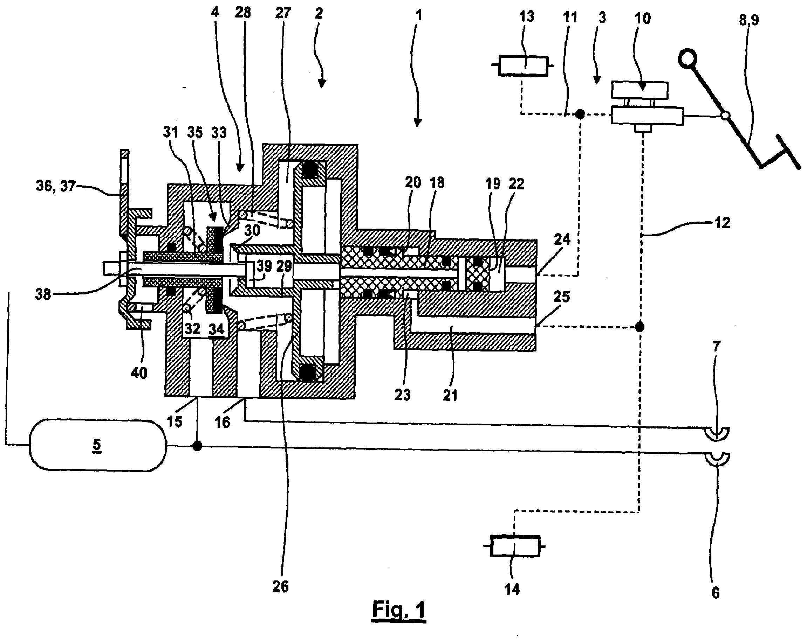

**Fig. 1** zeigt schematisch eine bekannte Bremseinrichtung 1 eines Zugfahrzeugs 2. Die Bremseinrichtung 1 besitzt eine hydraulische Betriebsbremseinrichtung 3, ein Anhängersteuerventil 4, einen in nicht dargestellter Weise mit Druckluft versorgten Vorratsbehälter 5, einen Kupplungskopf Vorrat 6 und einen Kupplungskopf Bremse 7, wobei die Kupplungsköpfe 6, 7 eine pneumatische Kopplung des Zugfahrzeugs 2 mit einem nicht dargestellten Anhänger ermöglichen.

Für das dargestellte Ausführungsbeispiel ist die hydraulische Betriebsbremseinrichtung 3 zweikreisig ausgebildet. In dieser ist die Betätigung eines Bremsbetätigungsorgans 8, hier ein Bremspedal 9, durch den Fahrer mechanisch mit der Bewegung eines (Haupt-)Bremszylinders 10 gekoppelt, der einen Hydraulikdruck in den Bremsleitungen 11, 12 der beiden Kreise erzeugt. Die Bremsleitungen 11, 12 sind jeweils mit einem oder mehreren Betriebsbremszylindern 13, 14 des Zugfahrzeugs 2 verbunden.

Der Vorratsbehälter 5 ist einerseits mit dem Kupplungskopf Vorrat 6 verbunden und andererseits über das Anhängersteuerventil 4 mit dem Kupplungskopf Bremse 7 verbunden, wobei ein pneumatischer Eingangsanschluss 15 des Anhängersteuerventils 4 mit dem Druckluftbehälter 5 verbunden ist, während ein pneumatischer Bremsdruck des über einen pneumatischen Ausgangsanschluss 16 Anhängersteuerventils 4 dem Kupplungskopf Bremse 7 zugeführt wird.

Das Anhängersteuerventil 4 dient dazu, entsprechend der Beaufschlagung der hydraulischen Betriebsbremseinrichtung 3, hier entsprechend dem hydraulischen Bremsdruck in den Bremsleitungen 11, 12, einen pneumatischen Bremsdruck am Ausgangsanschluss 16 zu erzeugen, mit dem über den Kupplungskopf Bremse 7 eine pneumatische Bremseinrichtung eines ggf. mit den Kupplungsköpfen 6, 7 gekoppelten Anhängers zu beaufschlagen.

Das Anhängersteuerventil 4 besitzt einen abgestuften Relaiskolben 18 mit einer durch eine stirnseitig gebildete Kolbenfläche 19 sowie einer durch die Abstufung gebildeten, kreisringförmigen weiteren Kolbenfläche 20. Der Relaiskolben 18 ist in einer entsprechenden abgestuften Bohrung eines Gehäuses 21 des Anhängersteuerventils 4 unter radialer Abdichtung und Ermöglichung einer axialen Gleitbewegung aufgenommen. Die Kolbenfläche 19 bildet mit dem Gehäuse 21 einen Steuerraum 22, während die Kolbenfläche 20 mit dem Gehäuse 21 einen weiteren Steuerraum 23 bildet. Die Steuerräume 22, 23 sind hydraulisch mit der hydraulischen Betriebsbremseinrichtung 3 verbunden, hier durch Verbindung des Steuerraums 22 mit der Bremsleitung 11 über einen hydraulischen Eingangsanschluss 24 des Anhängersteuerventils 4 sowie eine Verbindung des Steuerraums 23 mit der Bremsleitung 12 über einen hydraulischen Eingangsanschluss 25 des Anhängersteuerventils 4. Der Relaiskolben 18 stützt sich mit seiner dem Steuerraum 22 gegenüberliegenden Stirnseite an einem Wiegekolben 26 ab, der radial gegenüber dem Gehäuse 21 abgedichtet ist und auf der dem Relaiskolben 18 abgewandten Seite einen Wiegeraum 27 begrenzt. Der Wiegekolben 26 ist in dem Wiegeraum 27 über eine vorgespannte Druckfeder 28 abgestützt, die mit zunehmender hydraulischer Druckbeaufschlagung der Steuerräume 22, 23 zunehmend beaufschlagt wird. Der Wiegekolben 26 besitzt einen den Wiegeraum 27 durchsetzenden hülsenartigen Fortsatz 29, dessen Stirnseite einen Auslassventilkörper 30 bildet. Koaxial zu dem Relaiskolben 18 und dem Wiegekolben 26 ist auf der dem Relaiskolben 18 abgewandten Seite des Wiegekolbens 28 ein Doppelventilkörper 31 verschieblich gelagert und gegen eine Bewegung in Fig. 1 nach links unter Vorspannung über eine Druckfeder 32 gegenüber dem Gehäuse 21 abgestützt. Das Gehäuse 21 bildet einen Einlassventilsitz 33, an welchen über die Druckfeder 32 der Doppelventilkörper 31 in Fig. 1 nach rechts angepresst wird. In dieser Schaltstellung trennt ein mit dem Einlassventilsitz 33 und dem Doppelventilkörper 31 gebildetes Einlassventil einen Einlassraum 34, in welchen der Eingangsanschluss 15 mündet, von dem Wiegeraum 27, der pneumatisch mit dem Ausgangsanschluss 16 verbunden ist, so dass in dieser Schaltstellung keine Druckluft von dem Vorratsbehälter 5 zu dem Kupplungskopf Bremse 7 gelangen kann. Fig. 1 zeigt das Anhängersteuerventil 4 ohne hinreichende Beaufschlagung der Steuerräume 22, 23. Infolge der Wirkung der Druckfeder 28 ist der Wiegekolben 26 nach recht gedrückt an einen Anschlag des Gehäuses 21. Dies hat zur Folge, dass der Auslassventilkörper 30 beabstandet von dem Doppelventilkörper 31 angeordnet ist, dessen zugewandte Stirnseite einen Auslassventilsitz bildet. Über das derart gebildete Auslassventil ist für die dargestellte Stellung der Wiegeraum 27 über eine Durchgangsbohrung des Doppelventilkörpers 31 verbunden mit einer Entlüftung 40, so dass in der dargestellten Stellung des Anhängersteuerventils 4 der Wiegeraum 27 und damit der Kupplungskopf Bremse 7 entlüftet ist und der pneumatische Bremsdruck Null beträgt bzw. dem Umgebungsdruck entspricht. Mit einem Anstieg des hydraulischen Bremsdrucks in mindestens einem Steuerraum 22, 23 drückt der Relaiskolben 18 den Wiegekolben 26 nach links, bis dieser zur Anlage an den Doppelventilkörper 31 kommt, womit das Auslassventil geschlossen wird. Mit weiterer Druckerhöhung in den Steuerkammern 22, 23 drücken Relaiskolben 18 und Wiegekolben 26 über die dicht geschlossene Kontaktfläche mit dem Auslassventilkörper 30 den Doppelventilkörper 31 nach links, so dass sich der Doppelventilkörper 31 von dem Einlassventilsitz 33 entfernt und das Einlassventil geöffnet wird. Somit kann Druckluft von dem Eingangsanschluss 15 über den Einlassraum 34 und das Einlassventil zu dem Wiegeraum 27 und dem Ausgangsanschluss 16 strömen. Mit zunehmenden pneumatischem Bremsdruck, also auch zunehmenden Druck in dem Wiegeraum 27, steigt die Beaufschlagung des Wiegekolbens 26 nach rechts, bis die Summe der durch die Druckfedern 28, 32 hervorgerufenen Kräfte und der pneumatisch durch die Druckbeaufschlagung des Wiegeraums 27 hervorgerufene Kraft an dem Wiegekolben 26 die Kraft, die hydraulisch an den Kolbenflächen 19, 20 erzeugt wird, überschreitet. Mit diesem Überschreiten erfolgt eine automatische Verschiebung des Doppelventilkörpers 31, des Wiegekolbens 26 und des Relaiskolben 18 nach rechts bis zur Schließung des Einlassventils. Damit erzeugt das Anhängersteuerventil 4 auf automatische Weise einen pneumatischen Bremsdruck an dem Ausgangsanschluss 16, welcher grundsätzlich mit der hydraulischen Beaufschlagung der Bremsleitungen 11, 12 korreliert. Mit dem Auslassventilkörper 30, dem Doppelventilkörper 31, der einerseits einen Ventilsitz für den Auslassventilkörper 30 bildet und andererseits einen Ventilkörper für den Einlassventilsitz 33 bildet, und dem Einlassventilsitz 33 ist ein kombiniertes Einlass-Auslass-Ventil 35 gebildet.

Weiterhin besitzt das Anhängersteuerventil 4 für die dargestellte Ausführungsvariante einen Handbetätigungsorgan 36, über welches eine mechanische Betätigung der pneumatischen Bremse des Anhängers herbeigeführt werden kann. Für das in Fig. 1 dargestellte Ausführungsbeispiel ist das Handbetätigungsorgan 36 mit einem verschwenkbar gegenüber dem Gehäuse 21 gelagerten Handhebel 37 ausgebildet. Mit dem Handhebel 37 wird eine Welle 38 verdreht, die den Doppelventilkörper 31 unter Ausbildung eines radialen Spaltes zur Gewährleistung der zuvor erläuterten Entlüftung durchsetzt und sich in das Innere des Fortsatzes 29 erstreckt. In dem innenliegenden Endbereich besitzt die Welle 37 einen Hammerkopf 39, der sich auf der einen Seite auf einer Rippe des Fortsatzes 29 abstützt. Der Handhebel 37 bildet um das Gehäuse 21 des Anhängersteuerventils 4 eine topfartige Form, die sich auf einen nockenartigen Erhebung des Gehäuses 21 des Anhängersteuerventils 4 abstützt, so dass bei Verdrehung des Handhebels 37 dieser mitsamt der Welle 38 und dem Hammerkopf 39 eine Axialverschiebung des Fortsatzes 29, und damit des Wiegekolbens 26 und - nach Überwindung eines etwaigen Spalts - des Doppelventilkörpers 31 ausführt. Auf diese Weise kann somit manuell das Einlass-Auslass-Ventil 35 in seine Einlass- und Auslassstellung gesteuert werden. Um die vorgenannte Bewegung auch unabhängig von einer Stellung des Relaiskolbens 18 zu ermöglichen, sind Relaiskolben 18 und Wiegekolben 26 nicht starr miteinander verbunden, sondern liegen lediglich stirnseitig aneinander an.

Ergänzende Merkmale sowie weitere Ausgestaltungsmöglichkeiten für ein derartiges, an sich aus dem Stand der Technik bekanntes Anhängersteuerventil 4 sind beispielsweise den Druckschriften DE 33 38 690 A1 und DE 39 18 226 A1 oder weiteren eingangs genannten Druckschriften zu entnehmen. Im Folgenden werden für funktional entsprechende Bauelemente für die erfindungsgemäße Ausgestaltung Bezugszeichen entsprechend den in Fig. 1 gewählten Bezugszeichen gewählt.

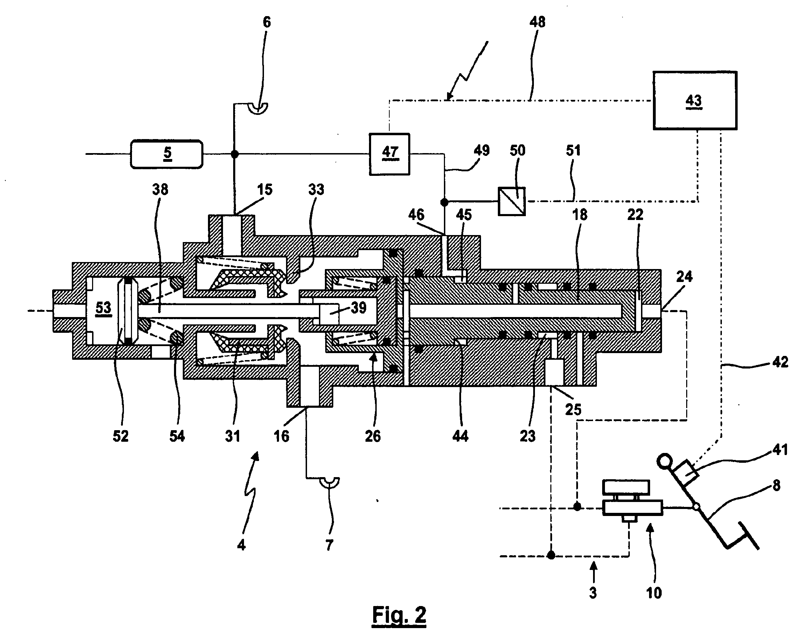

Für das in **Fig. 2** dargestellte Ausführungsbeispiel wird die Betätigung des Bremsbetätigungsorgans 8 über einen Weg-, Druckschalter oder Sensor 41 erfasst. Das Ausgangssignal des Sensors 42 wird über eine elektrische Leitung 42 einer Steuereinheit 43 zugeführt, die separat für die im Folgenden genannten Zwecke ausgebildet ist, integral für weitere Zwecke wie beispielsweise eine ABS- oder EBS-Funktion ausgebildet sein kann und/oder mit weiteren Steuereinheiten vernetzt sein kann, beispielsweise über einen CAN-Bus.

Der Relaiskolben 18 sowie die Bohrung des Gehäuses 21, in dem der Relaiskolben 18 aufgenommen ist, besitzen für dieses Ausführungsbeispiel jeweils eine weitere Stufe, so dass eine weitere Kolbenfläche 44 und ein mit dem Gehäuse 21 und der Kolbenfläche 44 begrenzter Druckraum 45 gebildet sind. In den Druckraum 45 mündet ein pneumatischer Steueranschluss 46. Zwischen den pneumatischen Steueranschluss 46 und den Vorratsbehälter 5 ist ein pneumatisches Ventil 47 zwischengeschaltet. Das pneumatische Ventil 47 besitzt vorzugsweise eine Entlüftungsstellung, in welcher der Pneumatikdruck an dem Steueranschluss 46 verringert oder entlüftet wird, sowie eine Durchlassstellung, in welcher der Pneumatikdruck an dem Steueranschluss 46 erhöht wird und maximal dem Druck in dem Vorratsbehälter 5 entspricht. Vorzugsweise besitzt das Ventil 47 eine oder mehrere weitere abgestufte Zwischenstellungen, in welchen der Pneumatikdruck in variierendem Ausmaß vergrößert oder verringert werden kann. Ebenfalls möglich ist, dass das Ventil 47 eine stufenlose Vorgabe eines Pneumatikdruckes an dem Steueranschluss 46 ermöglicht. Weiterhin kann das Ventil 47 eine Sperrstellung besitzen. Für das dargestellte Ausführungsbeispiel ist das Ventil 47 über eine elektrische Steuerleitung 48 von der Steuereinheit 43 angesteuert, wozu das Ventil 47 beispielsweise als Magnetventil ausgebildet ist. In einer Leitung 49 zwischen dem Ventil 47 und dem Steueranschluss 46 wird über einen Drucksensor 50 der Pneumatikdruck, der letztendlich in dem Druckraum 45 wirkt, erfasst. Das Ausgangssignal des Drucksensors 50 wird über eine elektrische Leitung 51 der Steuereinheit 43 zugeführt.

Die Funktionsweise des modifizierten Anhängersteuerventils 4 gemäß Fig. 2 ist wie folgt: Mit einer Betätigung des Betätigungsorgans 8 durch den Fahrer, aber vor Erreichen des Ansprechdrucks, für welchen der hydraulische Bremsdruck in den Druckräumen 22, 23 ausreichend ist, um an dem Ausgangsanschluss 16 einen pneumatischen Bremsdruck zu erzeugen, erfasst der Sensor 41 die Betätigung des Bremsbetätigungsorgans 8. In der Steuereinheit 43 wird ein Steuersignal erzeugt, welches über die Leitung 48 zur Ansteuerung des Ventils 47 dem Ventil 47 zugeführt wird. Das Ventil 47 wird entsprechend diesem Steuersignal in eine teilweise oder vollständige Öffnungsstellung verbracht. Der über das Ventil 47 dem Druckraum 45 zugeführte Pneumatikdruck wird ständig über den Drucksensor 50 erfasst. Stellt die Steuereinheit 43 fest, dass der von dem Drucksensor 50 erfasste Druckwert von dem gewünschten Pneumatikdruck abweicht, erzeugt die Steuereinheit 43 ein verändertes Steuersignal, welches dann über die Leitung 48 wiederum zur Ansteuerung dem Ventil 47 zugeführt wird. Für die Ermittlung des Steuersignals durch die Steuereinheit 43 und letztendlich die Bemessung des Pneumatikdrucks in dem Druckraum 45 kann die Steuereinheit vielfältige Fahrbetriebsparameter berücksichtigen, beispielsweise den Betätigungsverlauf des Bremsbetätigungsorgans 8, die Beladung vom Zugfahrzeug 2 und/oder Anhänger, den Straßenzustand, die Traktion und ähnliches, wobei in Abhängigkeit von derartigen Parametern dann die Öffnungsstellung, die Entlüftungsstellung 47 oder mindestens eine Zwischenstellung dieser Stellungen des Ventils 47 genutzt wird. Ebenfalls kann das Ventil 47 eine Sperrstellung besitzen, in welchem ein einmal erreichter Zustand der pneumatischen Beauschlagung des Druckraumes 45 konserviert wird.

Für das in Fig. 2 dargestellte Ausführungsbeispiel erfolgt eine manuelle Herbeiführung eines pneumatischen Bremsdrucks nicht wie gemäß Fig. 1 über einen Handhebel 37. Vielmehr besitzt die Welle 38 einen Steuerkolben 52, welcher in Richtung des Relaiskolbens 18 über einen pneumatischen oder hydraulischen Druckraum 53 entgegen der Beaufschlagung durch eine Druckfeder 54 beaufschlagt werden kann. Bei Druckentlastung des Druckraums 53 verschiebt die Druckfeder 54 den Steuerkolben 52 aus der in Fig. 2 dargestellten Stellung nach links. Der Hammerkopf 39 nimmt damit - ähnlich wie für Fig. 1 beschrieben - den Wiegekolben 26 mit nach links, was zur Folge hat, dass der Wiegekolben 26 zur Anlage an den Doppelventilkörper 31 kommt, während sich der Doppelventilkörper 31 von dem Einlassventilsitz 33 löst. In dieser Stellung gelangt Druckluft von dem Eingangsanschluss 15 über das Einlass-Auslass-Ventil 35 zu dem Ausgangsanschluss 6, so dass ein pneumatischer Bremsdruck ausgesteuert wird. Die Druckverhältnisse in dem Druckraum 53 können über ein beliebiges Ventil vorgegeben werden, welches beispielsweise ebenfalls von der Steuereinheit 43 angesteuert wird, die das Signal eines manuellen Schalters, eines Handbremsventils oder ähnliches verarbeiten kann. Je nach Flächen- und Federkraftauslegung kann man auf diese Weise eine modellierte oder eine "schwarz-weiße" Charakteristik einer Handbremsaussteuerung erzielen.

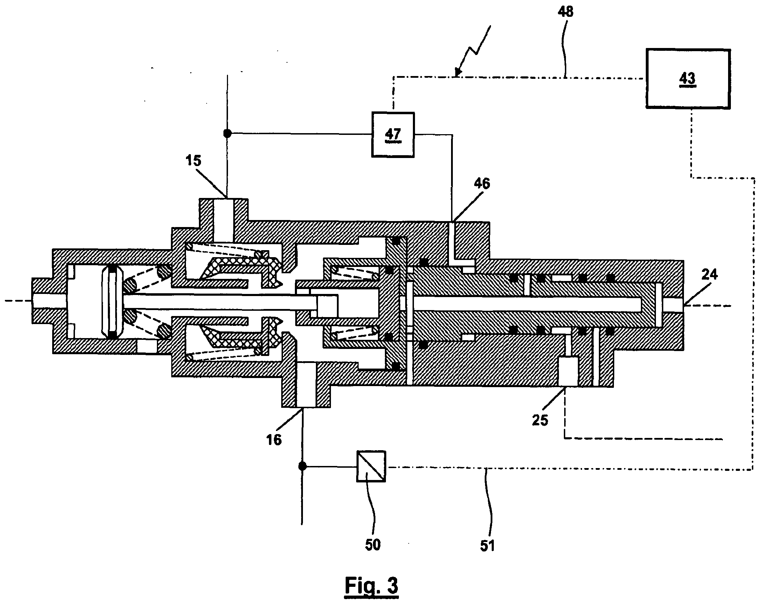

Im Gegensatz zur Fig. 2 ist für das Ausführungsbeispiel gemäß **Fig. 3** der Drucksensor 50 nicht stromaufwärts des Steueranschlusses 46 zur Erfassung des Pneumatikdruckes angeordnet. Vielmehr ist hier ein Drucksensor 50 in der Leitung zwischen dem Ausgangsanschluss 16 und dem Kupplungskopf Bremse 7 angeordnet. Auch hier wird das Ausgangssignal des Drucksensors 50 der Steuereinheit 43 zugeführt, die in diesem Fall unmittelbar eine Regelung des Pneumatikdruckes über das Ventil 47 derart vornehmen kann, dass sich der gewünschte pneumatische Bremsdruck ergibt. Es versteht sich, dass es auch möglich ist, dass sowohl stromaufwärts des Steueranschlusses 46 als auch stromabwärts des Ausgangsanschlusses 16 ein Drucksensor angeordnet sein kann, deren Ausgangssignale der Steuereinheit 43 zugeführt werden.

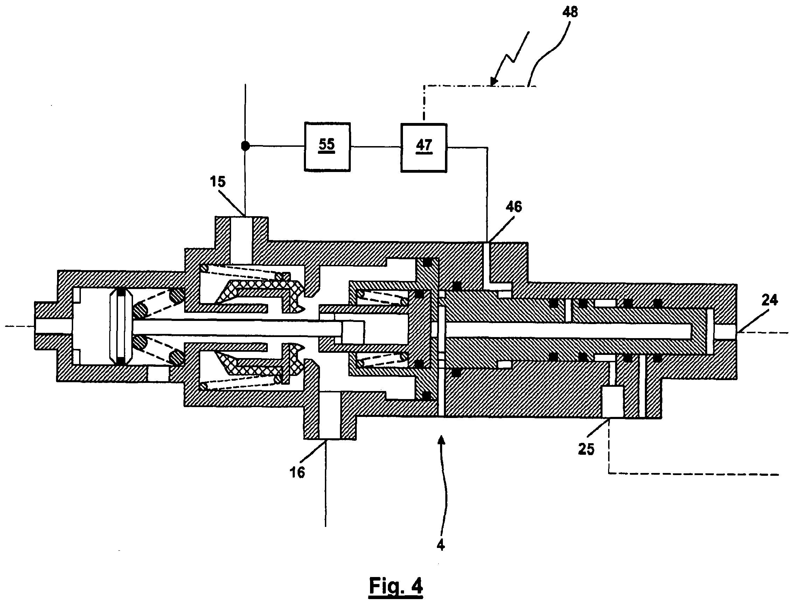

Für das in **Fig. 4** dargestellte Ausführungsbeispiel ist dem über die Steuereinheit 43 angesteuerten Ventil 47 ein nicht einstellbares oder einstellbares Druckbegrenzungsventil 55 vorgeordnet. Das Druckbegrenzungsventil 55 kann verwendet werden, um etwaige Druckschwankungen des Vorratsbehälters 5 von dem Druckraum 45 fernzuhalten, so dass der Pneumatikdruck, der dem Druckraum 45 zugeführt wird, hiervon unabhängig bleibt, was auch für unterschiedliche abgestufte Stellungen des Ventils 47 der Fall sein kann. In diesem Fall kann auch der Drucksensor 50 entfallen.

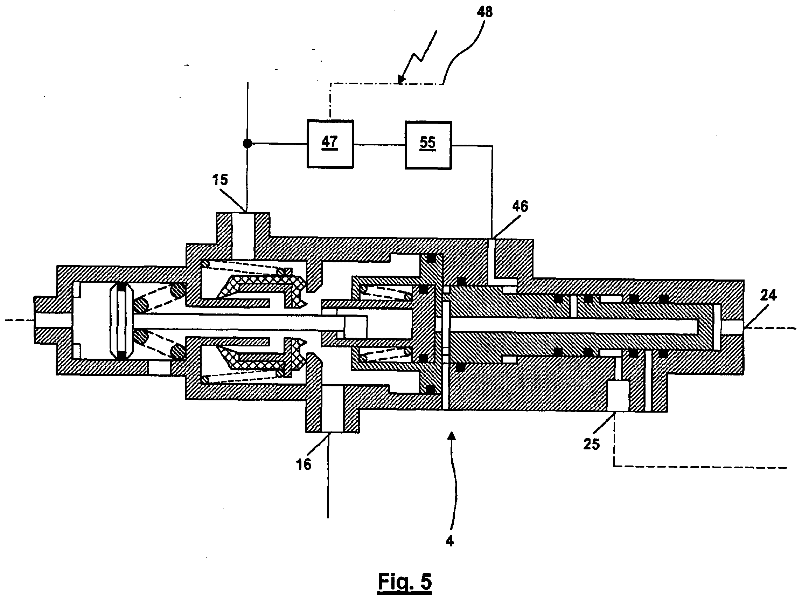

Abweichend zu Fig. 4 ist für das in **Fig. 5** dargestellte Ausführungsbeispiel das Druckbegrenzungsventil 55 dem Ventil 47 nachgeordnet. Dies hat zur Folge, dass das Druckbegrenzungsventil 55 nicht ständig mit dem Druck des Vorratsbehälters 5 beaufschlagt ist. Vielmehr ist das Druckbegrenzungsventil 55 keinem Druck ausgesetzt, wenn das Ventil 47 eine Entlüftungsstellung einnimmt. Auch für den Fall, dass das Ventil 47 einen gegenüber dem Vorratsbehälter 5 verminderten Druck in dem Druckraum 45 aussteuert, ist das Druckbegrenzungsventil 55 einer verminderten Druckbeaufschlagung ausgesetzt.

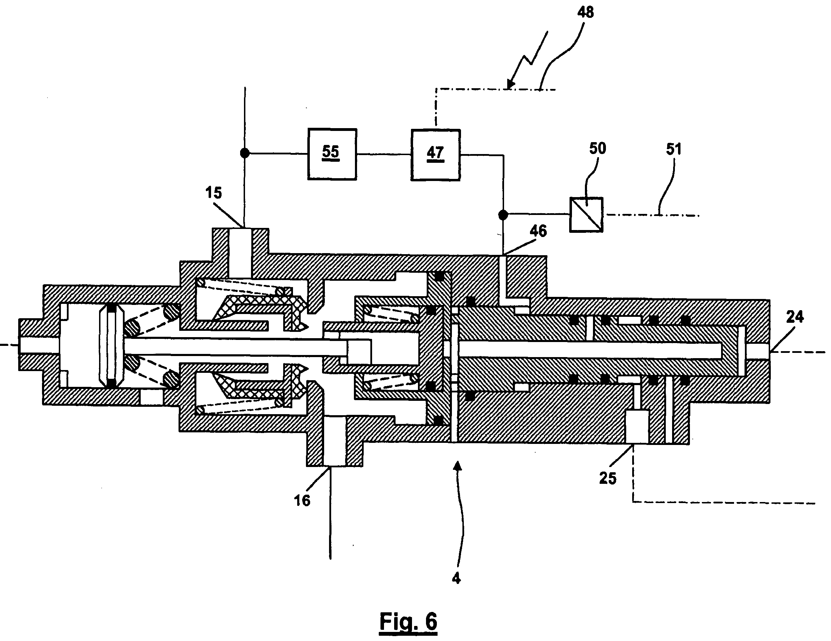

Abweichend zu Fig. 5 erfolgt gemäß dem in **Fig. 6** dargestellten Ausführungsbeispiel zusätzlich die Erfassung des Pneumatikdruckes durch den Drucksensor 50 mit Zuführung des Ausgangssignals des Drucksensors 50 über die elektrische Leitung 51 zu der hier nicht dargestellten Steuereinheit 43.

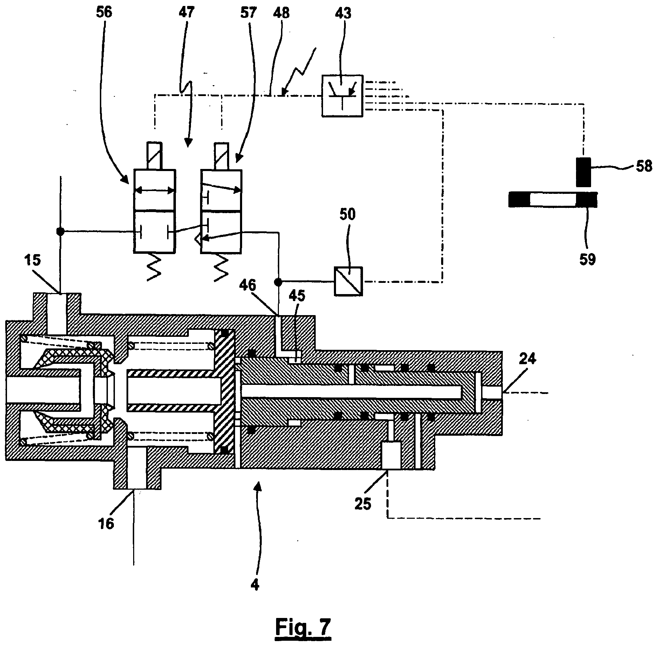

Für das in **Fig. 7** dargestellte Ausführungsbeispiel ist das Ventil 47 mit einer Hintereinanderschaltung von zwei Elektromagnetventilen, nämlich einem elektromagnetisch betätigten Sperrventil oder 2/2-Wegeventil 56 sowie einem elektrisch betätigten 3/2-Wegeventil 57 ausgebildet. Das 2/2-Wegeventil 56 ist derart federbelastet, dass sich dieses in dem stromlosen Zustand, der in Fig. 7 wirksam ist, in seiner Sperrstellung befindet, während das 2/2-Wegeventil 56 bei geeigneter elektrische Bestromung über die Steuerleitung 48 durch die Steuerleitung 48 durch die Steuereinheit 43 in seine Durchlassstellung schalten lässt. Das 3/2-Wegeventil ist derart federbelastet, dass sich dieses in dem in Fig. 7 wirksamen Zustand in einer Entlüftungsstellung befindet, während eine Bestromung des 3/2-Wegeventils 57 über die Steuerleitung 48 verursacht durch die Steuereinheit 43 das 3/2-Wegenventil 57 in eine Belüftungsstellung oder Durchlassstellung überführt. Ohne Bestromung sowohl des 2/2-Wegeventils 56 als auch des 3/2-Wegeventils 57 ist über das Ventil 47 eine Entlüftung des Druckraums 45 ermöglicht. Wird ausgehend von dieser Stellung das 3/2-Wegeventil 57 bestromt und in seine Durchlassstellung überführt, ist die Druckluftzufuhr und Entlüftung des Druckraumes 45 über das 2/2-Wegeventil 56 abgesperrt, so dass der Zustand in dem Druckraum 45 konstant gehalten wird. Wird ergänzend auch das 2/2-Wegeventil 56 bestromt, stellt das Ventil 47 eine pneumatische Verbindung zwischen dem Druckraum 45 und dem Vorratsbehälter 5 her, so dass Druckluft aus dem Vorratsbehälter 5 in den Druckraum 45 strömen kann und es zu einer Druckerhöhung in dem Druckraum 45 kommt. Ergänzend zu einem etwaigen Ausgangssignal eines Drucksensors 50 berücksichtigt die Steuerung oder Regelung in der Steuereinheit 43 das Ausgangssignal eines Drehzahlsensors 58, welcher die Bewegung eines zugeordneten Polrades erfasst, welche mit einem Teil des Antriebsstrangs des Zugfahrzeugs, insbesondere einem Fahrzeugrad, gekoppelt ist. Beispielsweise kann aus dem Ausgangssignal des Drehzahlsensors 28 der Geschwindigkeitsverlauf, eine Beschleunigung oder bei bekannter Masse des Zugfahrzeugs auch eine Verzögerungs- oder Beschleunigungskraft ermittelt werden, aus welcher die Steuerung oder Regelung in der Steuereinheit 43 eine erforderliche Bremskraft für den Anhänger ermittelt, so dass über geeignete Ansteuerung des Ventils 47 ein geeigneter Pneumatikdruck für den Druckraum 45 ausgesteuert werden kann, der zu dem gewünschten Bremsdruck führt. Ebenfalls möglich ist, dass über das Ausgangssignal des Drehzahlsensors 58 ein Schleppmoment des Zugfahrzeugs ermittelt wird, welches zu einer Verzögerung des Zugfahrzeuges führt, ohne das eine Betätigung des Betätigungsorgans 8 erfolgt. Ist ein derartiges Schleppmoment durch die Steuereinheit 43 ermittelt, kann ein pneumatischer Bremsdruck erzeugt werden, welcher mit einer adäquaten Abbremsung des Anhängers korreliert.

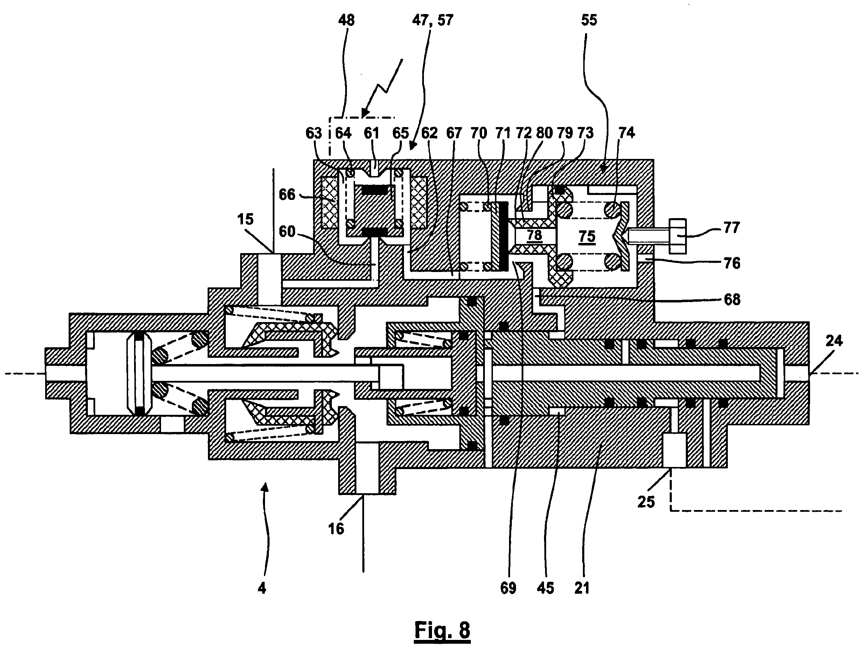

**Fig. 8** zeigt eine Ausführungsform, für welche, grundsätzlich entsprechend Fig. 5, ein von der Steuereinheit 43 angesteuertes Ventil 47, hier in Ausbildung als 3/2-Wegeventil 57 sowie ein Druckbegrenzungsventil 55, in das Gehäuse 21 des Anhängersteuerventils 4 integriert sind, wodurch sich eine kompakte Baueinheit ergibt. Das 3/2-Wegeventil 57 besitzt in diesem Fall einen Belüftungsanschluss 60, einen Entlüftungsanschluss 61 und einen Ausgangsanschluss 62. Der Belüftungsanschluss 60 ist durch einen in dem Anhängersteuerventil 4 verlaufenden Kanal mit dem Eingangsanschluss 15 verbunden, während der Ausgangsanschluss 62 mit dem Druckbegrenzungsventil 55 verbunden ist. In dem 3/2-Wegeventil 57 ist dem Belüftungsanschluss 60 sowie dem Entlüftungsanschluss 61 jeweils ein Ventilsitz zugeordnet, die koaxial zueinander auch gegenüberliegenden Seiten einer Ventilkammer 63 angeordnet sind. In der Ventilkammer 63 wird über eine Druckfeder 64 ein Ventilkörper 65 unter Erzeugung einer Schließstellung gegen den dem Belüftungsanschluss 60 zugeordneten Ventilsitz gepresst. In dieser Stellung verbindet das 3/2-Wegeventil 57 den Ausgangsanschluss 62 mit dem Entlüftungsanschluss 61. Durch Bestromung eines Elektromagneten 66 kann der Ventilkörper 65 von dem dem Belüftungsanschluss 60 zugeordneten Ventilsitz angehoben werden und entgegen der Beaufschlagung durch die Druckfeder 65 gegen den dem Entlüftungsanschluss 61 zugeordneten Ventilsitz gepresst werden. In dieser Belüftungsstellung des 3/2-Wegeventils schafft dieses eine Verbindung zwischen dem Belüftungsanschluss 60 und dem Ausgangsanschluss 62.

Das Druckbegrenzungsventil 55 besitzt einen Eingangsanschluss 67 sowie einen Ausgangsanschluss 68. Der Eingansanschluss 67 des Druckbegrenzungsventils 55 ist mit dem Ausgangsanschluss 62 des 3/2-Wegenventils 57 verbunden, während der Ausgangsanschluss 68 des Druckbegrenzungsventils 55 mit dem Druckraum 45 verbunden ist.

Das Druckbegrenzungsventil 55 ist mit einem kombinierten Einlass-Auslass-Ventil 69 gebildet. Ein Auslass-Ventil des Einlass-Auslass-Ventils 69 ist mit einer über eine Druckfeder 70 an dem Gehäuse 21 des Anhängersteuerventils 4 abgestützten Ventilplatte 71 gebildet, an welcher sich in der Schließstellung des Auslassventils ein Ventilkörper 72 unter Abdichtung abstützt. Der Ventilkörper 72 ist als Fortsatz 80 eines Kolbens 73 ausgebildet, wobei Ventilkörper 72 und Kolben 73 von einer Durchgangsbohrung 78 durchsetzt sind. Die der Ventilplatte 71 zugewandte Kolbenfläche des Kolbens 73 ist pneumatisch verbunden mit dem Ausgangsanschluss 68 und somit dem Druckraum 45. Auf der gegenüberliegenden Seite ist der Kolben 73 über eine Druckfeder 74 abgestützt, die in einem Entlüftungsraum 75 angeordnet ist mit zugeordneter Entlüftung 76. Der dem Kolben 73 abgewandte Federfußpunkt der Druckfeder 74 ist über einen Einstellmechanismus, hier eine Einstellschraube 77 verschieblich, so dass die Vorspannung der Druckfeder 74 manuell verändert werden kann. Ein Auslassventil des kombinierten Einlass-Auslass-Ventils 69 ist zwischen einem von dem Gehäuse 21 ausgebildeten Ventilsitz 79 und der Ventilplatte 71 auf derselben Seite der Ventilplatte 71 wie deren Kontakt mit dem Ventilkörper 72 gebildet. In der in Fig. 8 wirksamen Stellung ist das Ausgangsventil des Einlass-Auslass-Ventils 69geschlossen, da infolge der entgegengesetzten Beaufschlagungen durch die Druckfedern 70, 74 der Ventilkörper 72 an die Ventilplatte 71 gepresst wird, so dass der Entlüftungsraum 75 mit der Entlüftung 76 keine Verbindung mit dem Eingangsanschluss 67 und dem Ausgangsanschluss 68 hat. Das Einlassventil des Einlass-Auslass-Ventils 69 ist geöffnet, da die Ventilplatte 71 nicht an den Ventilsitz 79 gepresst wird, so dass ein Übertritt von Druckluft zwischen dem Eingangsanschluss 67 und dem Ausgangsanschluss 68 möglich ist. Für die in Fig. 8 wirksame Schaltstellung des 3/2-Wegeventils 57 kann infolge des geöffneten Einlassventils der Druckraum 45 über das 3/2-Wegeventil entlüftet werden. Wird hingegen durch Bestromung des Elektromagneten 66 das 3/2-Wegeventil 57 aus der in Fig. 8 wirksamen Schaltstellung in die Belüftungsstellung verbracht, strömt Druckluft aus dem Vorratsbehälter 5 über den Eingangsanschluss 15, den Belüftungsanschluss 60, den Ausgangsanschluss 62, den Eingangsanschluss 67, das geöffnete Einlassventil, den Ausgangsanschluss 68 zu dem Druckraum 45. Mit ansteigendem Pneumatikdruck in dem Druckraum 45 wirkt auf den Kolben 73 ebenfalls ein sich vergrößernder Druck, so dass der Kolben zunehmend pneumatisch in Fig. 8 nach rechts beaufschlagt wird. Zunächst führt diese zunehmende Druckbeaufschlagung dazu, dass unter Anpressung der Ventilplatte 71 an den Ventilkörper 72 Ventilplatte 71 und Ventilkörper 72 als eine Einheit nach rechts verschoben werden unter Unterstützung durch die Druckfeder 70 und entgegen der Beaufschlagung durch die Druckfeder 74. Das Einlassventil wird somit zunehmend geschlossen, bis die Ventilplatte 71 zur Anlage an den Ventilsitz 79 kommt, womit sowohl das Einlassventil als auch das Auslassventil des kombinierten Einlass-Auslass-Ventils 69 geschlossen ist. Damit ist der Druckraum 45 abgesperrt. Für die in Fig. 8 dargestellte Ausführungsform ist keine Öffnung des Auslassventils möglich. Wird hingegen aus der beschriebenen Stellung das 3/2-Wegeventil 57 in seine Entlüftungsstellung gebracht, entfällt die die Ventilplatte 71 in Schließrichtung beaufschlagende Kraftkomponente, so dass mit einer Bewegung des Ventilkörpers 72 nach links das Einlassventil wieder geöffnet wird und eine Entlüftung des Druckraums 45 ermöglicht ist.

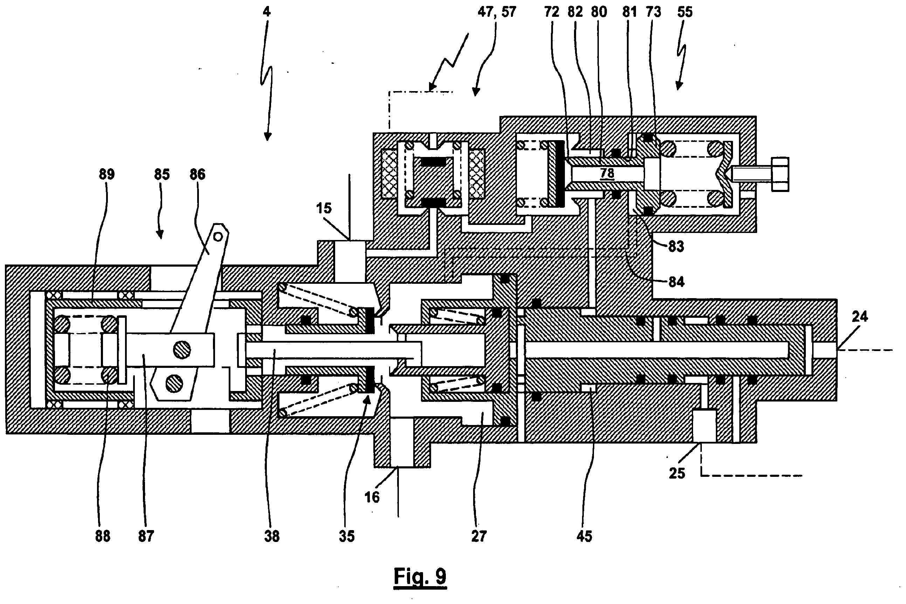

Bei ansonsten im Wesentlichen Fig. 8 entsprechender Ausgestaltung ist für das in **Fig. 9** dargestellte Ausführungsbeispiel der Fortsatz 80 des Kolbens 73, welcher in dem dem Kolben 73 gegenüberliegenden Endbereich den Ventilkörper 72 ausbildet, durch eine abgedichtete Führungsbohrung 81 des Gehäuses 21 hindurchgeführt wird. Somit entsteht zusätzlich zu einem Ausgangsraum 82, welcher über das Einlassventil mit dem Eingangsanschluss verbindbar ist sowie über das Auslassventil mit dem Entlüftungsraum verbindbar ist, auf der anderen Seite der Führungsbohrung 81 ein Steuerraum 83, welcher von der Kolbenfläche des Kolbens 73 begrenzt ist. Der Steuerraum 83 ist über eine interne Leitung 84 mit dem Wiegeraum 27 verbunden. Für diese Ausgestaltung wird durch das Druckbegrenzungsventil 55 infolge des Einlassventils nicht nur der Maximaldruck in dem Druckraum 45 begrenz. Infolge der Rückführung des Drucks in dem Wiegeraum 27, also der Rückführung des pneumatischen Bremsdrucks, zu dem Steuerraum 83 steigt mit einer Erhöhung des pneumatischen Bremsdrucks die Kraft auf den Kolben 73 in Fig. 9 nach rechts. Bein Erreichen eines am Druckbegrenzungsventil 55 durch Dimensionierung der Querschnitte, der Kolbenflächen sowie der Druckfedern vorgegebenen Drucks kann in der Schließstellung des Einlassventils zwischen Ventilkörper 72 und Ventilplatte 71 ein Öffnungsspalt entstehen, so dass das Auslassventil des kombinierten Einlass-Auslass-Ventils 69 geöffnet wird. Diese Öffnung hat zur Folge, dass eine Öffnung des Druckraumes 45 über die Entlüftung 76 erfolgt, womit letztendlich der unerwünschte Überhöhung des pneumatischen Bremsdrucks entgegen gewirkt werden kann. Weiterhin ist in Fig. 9 eine mechanische Betätigungseinrichtung 85 für eine Feststellbremse dargestellt. Diese verfügt über einen verschwenkbar angeordneten Betätigungshebel 86, an welchem ein verursacht durch die Verschwenkung des Betätigungshebels 86 verschieblicher Betätigungsstößel 87 angelenkt ist. Dieser ist unter Zwischenschaltung einer Druckfeder 88 an einem Führungsschlitten 89 angestützt. An dem Führungsschlitten 89 ist wiederum in der in Fig. 9 skizzierten Endlage einseitig die Welle 38 abgestützt. Wird in Fig. 9 der Betätigungshebel 86 entgegen dem Uhrzeigersinn verschwenkt, wird dies zu einer Bewegung des Betätigungsstößels 87 sowie des Führungsschlittens 89 nach links umgewandelt, womit gemäß der einseitig wirkenden Kopplung zwischen Führungsschlitten 89 und Welle 38 auch die Welle 38 und der Hammerkopf 39 nach links bewegt werden. Mit dieser Bewegung wird letztendlich das Auslassventil des Einlass-Auslass-Ventils 35 geschlossen, während das Einlass-Ventil geöffnet wird, so dass ein pneumatischer Bremsdruck erzeugt werden kann zur manuellen Aktivierung eines pneumatischen Bremsdrucks und der Bremsen des Anhängers.

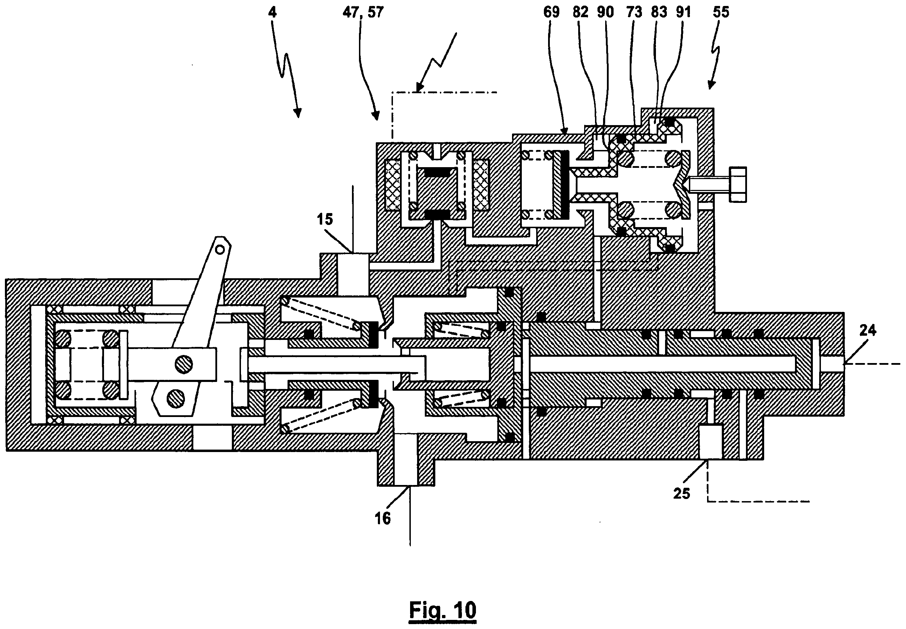

Auch für das in **Fig. 10** dargestellte Ausführungsbeispiel verfügt das Druckbegrenzungsventil 55 sowohl über einen Ausgangsraum 82 als auch einen Steuerraum 83. Allerdings ist in diesem Fall der Kolben 73 als ein abgestufter Kolben ausgebildet, der somit eine Kolbenfläche 90 bildet, mit welcher der Ausgangsraum 82 begrenzt ist, sowie eine Kolbenfläche 91 bildet, mit welcher der Steuerraum 83 begrenzt ist. Dies hat zur Folge, dass eine Beeinflussung der Kräfte, die auf den Kolben 73 wirken, sowohl durch den Pneumatikdruck des Druckraums 45 als auch durch den pneumatischen Bremsdruck in dem Wiegeraum 27 erfolgt. Somit bestimmen zwei Druckwerte die notwendige gemeinsame Kraftkomponente, um eine Abschlussstellung des Einlass-Auslass-Ventils 69 zu erreichen.

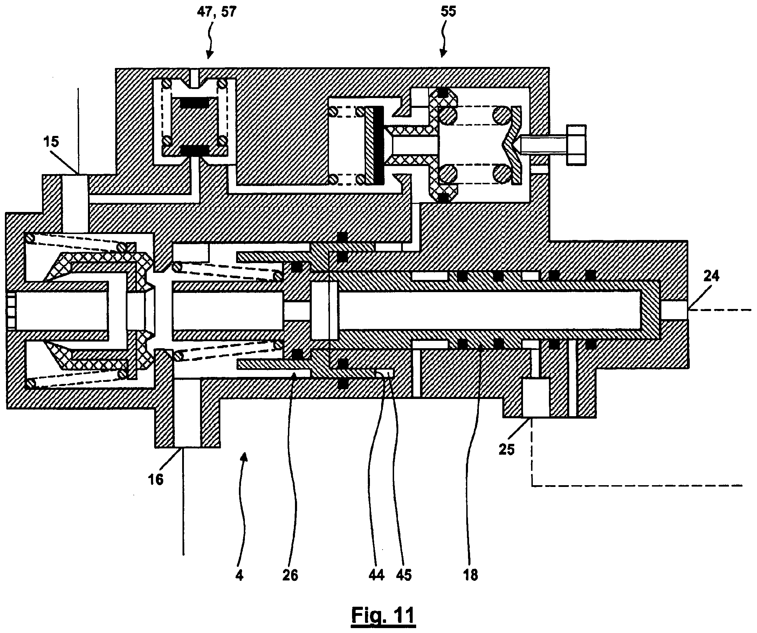

Gem. dem in den Fig. 2 - 10 dargestellten Ausführungsbeispielen wirkt der geregelte oder gesteuerte Pneumatikdruck in dem Druckraum 45 auf die Kolbenfläche 44 des Relaiskolbens 18. Eine hierdurch hervorgerufene Kraft wird an der Stirnseite des Relaiskolbens 18 auf den Wiegekolben 26 übertragen. Es ist durchaus möglich, dass gemäß Fig. 11 der Relaiskolben selbst lediglich mit dem hydraulischen Bremsdruck beaufschlagt wird, während der Pneumatikdruck auf den Wiegekolben 26 wirkt.

Gemäß **Fig. 11** wird der Druckraum 45 mit einer von dem Wiegekolben 26 ausgebildeten Kolbenfläche 44 begrenzt.

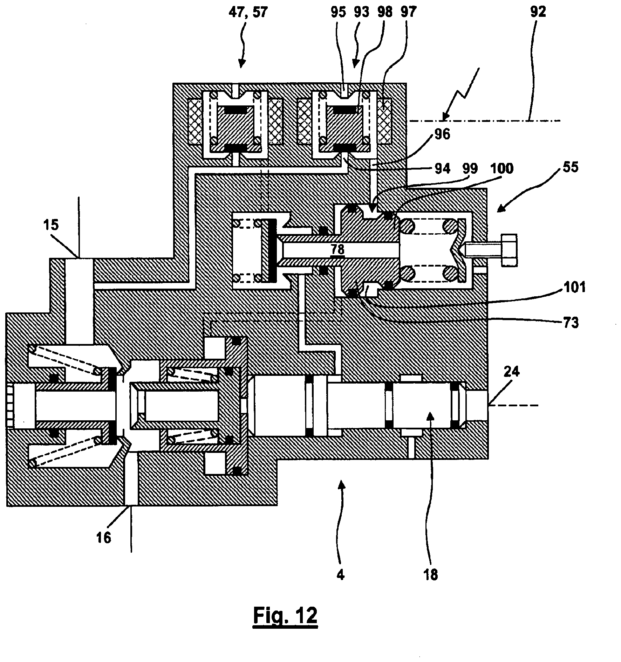

Das in **Fig. 12** dargestellte Ausführungsbeispiel betrifft zunächst lediglich eine einkreisige Ausbildung des hydraulischen Bremskreises bzw. lediglich die Zuführung eines hydraulischen Bremsdrucks zu einem hydraulischen Eingangsanschluss 24. Ansonsten entspricht die Ausführungsform gemäß Fig. 12 grundsätzlich der Ausführungsform gemäß Fig. 9. Zusätzlich zu dem elektromagnetisch betätigten 3/2-Wegeventil 57 ist ein elektromagnetisch über eine Steuerleitung 92 durch die Steuereinheit 43 betätigtes 3/2-Wegeventil 93 vorgesehen. Das 3/2-Wegeventil 93 verfügt über einen Belüftungsanschluss 94, der über den Eingangsanschluss 15 mit dem Vorratsbehälter 5 verbunden ist. Weiterhin ist ein Entlüftungsanschluss 95 an dem 3/2-Wegeventil 93 vorhanden. Schließlich besitzt das 3/2-Wegeventil einen Ausgangsanschluss 96. In der in Fig. 12 wirksamen Entlüftungsstellung des 3/2-Wegeventils 93 verbindet dieses den Ausgangsanschluss 96 mit dem Entlüftungsanschluss 95, während mit elektrischer Beaufschlagung über einen Elektromagneten 57 ein Ventilkörper 98 eine Belüftungsstellung einnehmen kann, in welcher der Entlüftungsanschluss 95 abgesperrt ist, aber eine pneumatische Verbindung zwischen dem Belüftungsanschluss 94 und dem Ausgangsanschluss 96 geschaffen ist. Der Kolben 73 ist für diese Ausführungsform Teil eines Doppelkolbens 99, bei welchem zwischen dem Kolben 73 sowie einem weiteren Kolben 100 ein Ringraum 101 gebildet ist. Auch der Doppelkolben 99 ist von der Durchgangsbohrung 78 durchsetzt. Der Ausgangsanschluss 96 des 3/2-Wegenventils 93 ist mit dem Ringraum 99 verbunden. Der weitere Kolben 100 besitzt hierbei einen geringeren Durchmesser als der Kolben 73, so dass eine Druckbeaufschlagung des Ringraumes 99 eine Kraftkomponente auf den Doppelkolben 99 ausübt, welche in Fig. 12 nach links orientiert ist. Wird das Magnetventil 93 in seine Belüftungsstellung verbracht, verändern sich die Kraftverhältnisse an dem Druckbegrenzungsventil 55 derart, dass das Einlassventil des kombinierten Einlass-Auslass-Ventils 69 erst bei einem höheren Pneumatikdruck in dem Druckraum 45 geschlossen wird als dies der Fall ist, wenn sich das 3/2-Wegenventil 93 in seiner Entlüftungsstellung befindet. Letztendlich kann somit je nach Stellung des 3/2-Wegeventils 93 ein unterschiedlicher pneumatischer Bremsdruck an dem Ausgangsanschluss 16 ausgesteuert werden. Beispielsweise kann für das 3/2-Wegeventil 93 in seiner Entlüftungsstellung ein niedriger pneumatischer Bremsdruck ausgesteuert werden im Rahmen der Vorsteuerung einer Bremsung, welche durch manuelle Betätigung des hydraulischen Bremskreises durch den Fahrer ausgelöst wird. Hingegen kann die Beeinflussung der Kraftverhältnisse an dem Doppelkolben 99 auch derart sein, dass allein mit elektrischer Bestromung der 3/2-Wegeventile 57, 93 eine Bewegung des Wiegekolbens 26 derart erfolgen kann, dass auch ohne hydraulischen Bremsdruck ein pneumatischer Bremsdruck am Ausgangsanschluss 16 ausgesteuert wird. Somit kann automatisiert durch die Steuereinheit 43 eine Bremsung ausgelöst (und auch wieder beendet) werden. Lediglich beispielhaft wird als Anwendungsfall für diese Ausgestaltung genannt, dass für den Fall, dass erkannt wird, dass das Zugfahrzeug infolge von Schleppverlusten in einem automatischen Getriebe ohne Betätigung der Bremsen abgebremst wird, mit elektrischer Bestromung der 3/2-Wegeventile 57, 93 eine korrespondierende Bremskraft an dem Anhänger erzeugt wird, um zu vermeiden, dass der Anhänger auf das Zugfahrzeug aufläuft, da dieser nicht über entsprechende Schleppverluste verfügt, da in dem Anhänger kein Getriebe vorhanden ist.

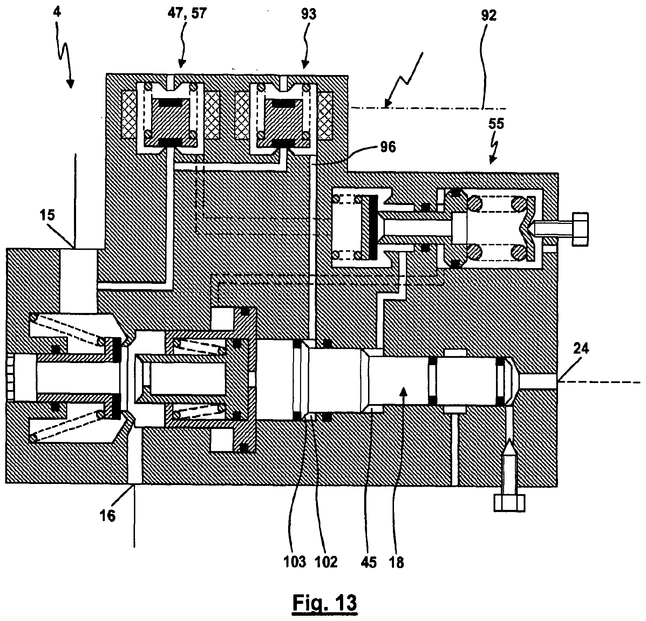

Das in **Fig. 13** dargstellte Ausführungsbeispiel entspricht zunächst grundsätzlich der Ausführungsform gemäß Fig. 9. Allerdings ist hier auch das 3/2-Wegeventil 93 gemäß Fig. 12 eingesetzt. Abweichend zu Fig. 12 ist allerdings für diese Ausführungsform der Anschluss 96 des 3/2-Wegeventils 93 nicht mit dem Druckbegrenzungsventil 55 verbunden. Vielmehr wird über das 3/2-Wegeventil 93 unmittelbar ein zusätzlicher Druckraum 102 angesteuert, welcher von einer zusätzlichen Kolbenfläche 103 des Relaiskolbens 18 begrenzt ist. Für diese Ausführungsform kann somit über die Ansteuerung des 3/2-Wegeventils 93 durch die Steuereinheit 43 unmittelbar eine Ansteuerung des Relaiskolbens 18 erfolgen, wobei je nach Auslegung (insbesondere der Kolbenfläche 103) über diese direkte Ansteuerung
- lediglich eine Beeinflussung der Kraftverhältnisse und damit der Öffnungs- und Schließpunkte des Anhängersteuerventils 4 erfolgen kann oder aber
- über die Überführung des 3/2-Wegeventils 93 in seine Belüftungsstellung und die Belüftung des Druckraums 102 allein hierdurch, auch ohne einen vorhandenen hydraulischen Bremsdruck, durch Öffnung des Einlassventils des kombinierten Einlass-Auslass-Ventils 35 ein pneumatischer Bremsdruck erzeugt werden.

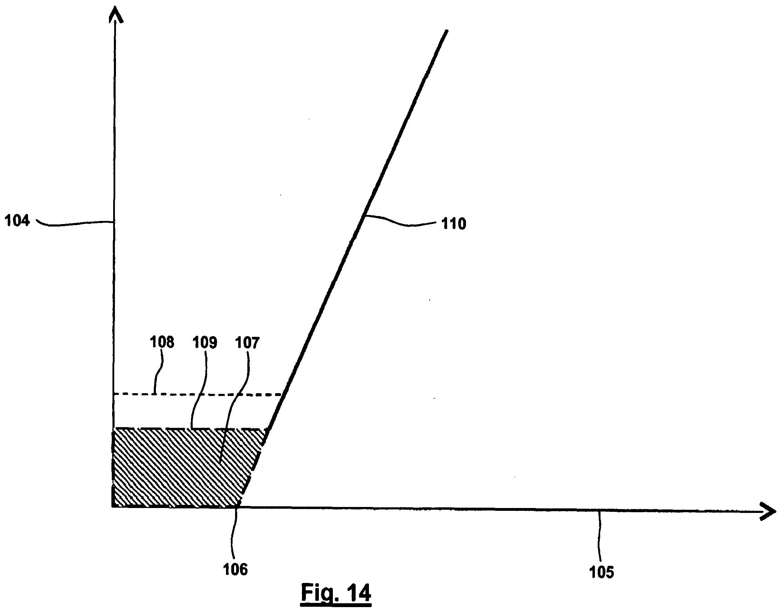

**Fig. 14** zeigt eine Kennlinie, bei welcher auf der Achse 104 der pneumatische Bremsdruck als Funktion des auf der Achse 105 dargestellten hydraulischen Bremsdrucks dargestellt ist. Ohne die dargestellte Vorsteuerung muss zunächst ein Ansprechdruck 106 des hydraulischen Bremsdrucks erreicht werden, bevor mit weiterer Erhöhung des hydraulischen Bremsdrucks eine proportionale Erhöhung des pneumatischen Bremsdrucks erfolgt. Der Ansprechdruck 106 kann hierbei in einem Bereich von 4 - 8 bar angesiedelt sein. Um die hierdurch hervorgerufene Nacheilung des pneumatischen Bremsdrucks auszugleichen, wird erfindungsgemäß eine Art Vorsteuerung vorgesehen, die in dem schraffierten Feld 107 je nach Wahl der konstruktiven Parameter sowie Wahl der Steuer- oder Regelparameter der Steuereinheit 43 frei einstellbar ist. Je nach Wahl der Steuer- und Regelparameter können beispielsweise unterschiedliche Kennlinien 108, 109 infolge der pneumatischen Vorsteuerung durchlaufen werden, bevor die Kennlinie 110 erreicht wird, in welcher einer lineare Abhängigkeit zwischen dem pneumatischen Bremsdruck und dem hydraulischen Bremsdruck gegeben ist. Beispielsweise kann eine Wahl unterschiedlicher Kennlinien 108, 109 in Abhängigkeit davon erfolgen, ob eine Anhängerabbremsung im Zusammenhang mit Schleppmomenten an dem Zugfahrzeug durch das automatische Getriebe bei einem Lastwechsel oder einem Leerlauf entstehen.

**BEZUGSZEICHENLISTE**

| | | | |
|---|---|---|---|
| 1 | Bremseinrichtung | 31 | Doppelventilkörper |
| 2 | Zugfahrzeug | 32 | Druckfeder |
| 3 | Betriebsbremseinrichtung | 33 | Einlassventilsitz |
| 4 | Anhängersteuerventil | 34 | Einlassraum |
| 5 | Vorratsbehälter | 35 | Einlass-Auslass-Ventil |
| 6 | Kupplungskopf Vorrat | 36 | Handbetätigungsorgan |
| 7 | Kupplungskopf Bremse | 37 | Handhebel |
| 8 | Bremsbetätigungsorgan | 38 | Welle |
| 9 | Bremspedal | 39 | Hammerkopf |
| 10 | Bremszylinder | 40 | Entlüftung |
| 11 | Bremsleitung | 41 | Sensor |
| 12 | Bremsleitung | 42 | Leitung |
| 13 | Betriebsbremszylinder | 43 | Steuereinheit |
| 14 | Betriebsbremszylinder | 44 | Kolbenfläche |
| 15 | Eingangsanschluss | 45 | Druckraum |
| 16 | Ausgangsanschluss | 46 | Steueranschluss |
| 17 | | 47 | Ventil |
| 18 | Relaiskolben | 48 | Steuerleitung |
| 19 | Kolbenfläche | 49 | Leitung |
| 20 | Kolbenfläche | 50 | Drucksensor |
| 21 | Gehäuse | 51 | Leitung |
| 22 | Steuerraum | 52 | Steuerkolben |
| 23 | Steuerraum | 53 | Druckraum |
| 24 | Eingangsanschluss | 54 | Druckfeder |
| 25 | Eingangsanschluss | 55 | Druckbegrenzungsventil |
| 26 | Wiegekolben | 56 | 2/2-Wegeventil |
| 27 | Wiegeraum | 57 | 3/2-Wegeventil |
| 28 | Druckfeder | 58 | Drehzahlsensor |
| 29 | Fortsatz | 59 | Polrad |
| 30 | Auslassventilkörper | 60 | Belüftungsanschluss |
| 61 | Entlüftungsanschluss | 86 | Betätigungshebel |
| 62 | Ausgangsanschluss | 87 | Betätigungsstößel |
| 63 | Ventilkammer | 88 | Druckfeder |
| 64 | Druckfeder | 89 | Führungsschlitten |
| 65 | Ventilkörper | 90 | Kolbenfläche |
| 66 | Elektromagnet | 91 | Kolbenfläche |
| 67 | Eingangsanschluss | 92 | Steuerleitung |
| 68 | Ausgangsanschluss | 93 | 3/2-Wegeventil |
| 69 | Einlass-Auslass-Ventil | 94 | Belüftungsanschluss |
| 70 | Druckfeder | 95 | Entlüftungsanschluss |
| 71 | Ventilplatte | 96 | Ausganganschluss |
| 72 | Ventilkörper | 97 | Elektromagnet |
| 73 | Kolben | 98 | Ventilkörper |
| 74 | Druckfeder | 99 | Doppelkolben |
| 75 | Entlüftungsraum | 100 | Kolben |
| 76 | Entlüftung | 101 | Ringraum |
| 77 | Einstellschraube | 102 | Druckraum |
| 78 | Durchgangsbohrung | 103 | Kolbenfläche |
| 79 | Ventilsitz | 104 | Achse |
| 80 | Fortsatz | 105 | Achse |
| 81 | Führungsbohrung | 106 | Ansprechdruck |
| 82 | Ausgangsraum | 107 | Feld |
| 83 | Steuerraum | 108 | Kennlinie |
| 84 | Leitung | 109 | Kennlinie |
| 85 | Betätigungseinrichtung | 110 | Kennlinie |

## Patentansprüche

1. Verfahren zum Betrieb einer Bremseinrichtung (1) für ein hydraulisch gebremstes Zugfahrzeug (2), welches mit einem pneumatisch gebremsten Anhänger koppelbar ist, mit einem hydraulisch betätigten und ergänzend mit einem Pneumatikdruck pneumatisch vorgesteuerten Anhängersteuerventil (4), **dadurch gekennzeichnet, dass** während des Fahrbetriebs der zeitliche Verlauf und/oder Betrag des das Anhängersteuerventil vorsteuernden Pneumatikdrucks abhängig von Fahrbetriebsbedingungen gesteuert oder geregelt wird, wobei in einem Druckbegrenzungsventil (55) ein Stellkolben (73) sowohl mit dem vorsteuernden Pneumatikdruck als auch mit dem von dem Anhängersteuerventil (4) ausgesteuerten pneumatischen Bremsdruck beaufschlagt wird.

2. Verfahren nach Anspruch 1 mit
a) einem Bremsbetätigungsorgan (8), welches zur Erzeugung eines hydraulischen Bremsdrucks für eine hydraulische Betriebsbremse (Betriebsbremszylinder 12; 14) des Zugfahrzeugs betätigt wird,
b) einem Anhängersteuerventil (4), in welchem eine erste Kolbenfläche (19) mit dem hydraulischen Bremsdruck beaufschlagt wird, wobei in dem Anhängersteuerventil (4) nach dem Überschreiten eines Ansprechdrucks in Anhängigkeit der Beaufschlagung der ersten Kolbenfläche (19) mit dem hydraulischen Bremsdruck ein Einlass-Ventil (35) geöffnet wird und an einem Ausgangsanschluss (16) des Anhängersteuerventils (4) ein pneumatischer Bremsdruck erzeugt wird, welcher einem Kupplungskopf Bremse (7) für eine Kopplung mit dem Anhänger zugeführt wird,
c) einem pneumatischen Ventil (47), welches mit Betätigung des Bremsbetätigungsorgans (8), aber bereits vor Erreichen des Ansprechdrucks, in eine Ventilstellung überführt wird, in der das pneumatische Ventil (47) einen Pneumatikdruck an eine zweite Kolbenfläche (44) des Anhängersteuerventils (4) weiterleitet, wobei durch Beaufschlagung der zweiten Kolbenfläche (44) mit dem Pneumatikdruck das Einlass-Ventil (35) zumindest teilweise geöffnet wird und an dem Ausgangsanschluss (16) des Anhängersteuerventils (4) bereits ein pneumatischer Bremsdruck erzeugt wird, welcher dem Kupplungskopf Bremse (7) zugeführt wird, bevor der hydraulische Bremsdruck den Ansprechdruck erreicht, wobei
d) während des Fahrbetriebs das Ausmaß der Beaufschlagung der zweiten Kolbenfläche (44) mit dem Pneumatikdruck abhängig von Fahrbetriebsbedingungen gesteuert oder geregelt wird.

3. Verfahren nach einem der vorhergehenden Ansprüche, **dadurch gekennzeichnet, dass** die Steuerung oder Regelung während des Fahrbetriebs unter Berücksichtigung eines Signals, welches von der Betätigung des Bremsbetätigungsorgans und/oder dem pneumatischen Bremsdruck abhängig ist, erfolgt.

4. Verfahren nach einem der vorhergehenden Ansprüche, **dadurch gekennzeichnet, dass** während des Fahrbetriebs eine von Fahrbetriebsbedingungen abhängige Steuerung oder Regelung der Dauer des Pneumatikdrucks erfolgt.

5. Verfahren nach einem der vorhergehenden Ansprüche, **dadurch gekennzeichnet, dass** die von Fahrbetriebsbedingungen abhängige Steuerung oder Regelung unter Berücksichtigung
a) eines Vergleichs des hydraulischen Bremsdrucks des Zugfahrzeugs (2) und des von dem Anhängersteuerventil (4) ausgesteuerten pneumatischen Bremsdrucks für den Anhänger,
b) eines Vergleichs der hydraulisch erzeugten Bremskraft des Zugfahrzeugs (2) und der pneumatisch erzeugten Bremskraft des Anhängers,
c) von Informationen einer ABS- oder EBS-Einheit,
d) von Informationen eines Navigationssystems,
e) einer Kopplungskraft oder eines Kopplungswegs zwischen Zugfahrzeug (2) und Anhänger,
f) des Betätigungsverlaufs der Betätigung des Bremsbetätigungsorgans (8) und/oder
g) eines Geschwindigkeits- oder Beschleunigungssignals
erfolgt.

6. Verfahren nach einem der vorhergehenden Ansprüche, **dadurch gekennzeichnet, dass** die Beaufschlagung der zweiten Kolbenfläche (44) mit dem Pneumatikdruck automatisiert mit dem Erreichen eines Beendigungskriteriums beendet wird.

7. Verfahren nach Anspruch 6, **dadurch gekennzeichnet, dass** das Beendigungskriterium
a) den Verlauf des pneumatischen und/oder des hydraulischen Bremsdrucks,
b) den Verlauf der pneumatisch erzeugten Bremskraft des Anhängers und/oder der hydraulisch erzeugten Bremskraft des Zugfahrzeugs (2),
c) eine Zeitdauer der Betätigung des Bremsbetätigungsorgans (8),
d) eine Beladung des Zugfahrzeugs (2) und/oder des Anhängers,
e) eine Kopplungskraft oder eines Kopplungswegs zwischen Zugfahrzeug (2) und Anhänger,
f) den Betätigungsverlauf der Betätigung des Bremsbetätigungsorgans (8),
g) Informationen einer ABS- oder EBS-Einheit,
h) Informationen eines Navigationssystems und/oder
h) ein Geschwindigkeits- oder Beschleunigungssignal
berücksichtigt.

8. Verfahren nach einem der vorhergehenden Ansprüche, **dadurch gekennzeichnet, dass** über einen Drucksensor (50) der die zweite Kolbenfläche (44) beaufschlagende Pneumatikdruck erfasst wird.

9. Verfahren nach einem der vorhergehenden Ansprüche, **dadurch gekennzeichnet, dass** über einen Drucksensor (50) der von dem Anhängersteuerventil (4) ausgesteuerte pneumatische Bremsdruck erfasst wird.

10. Verfahren nach einem der vorhergehenden Ansprüche, **dadurch gekennzeichnet, dass** das Ausmaß der Beaufschlagung der zweiten Kolbenfläche (44) mit dem Pneumatikdruck unter Einsatz eines einstellbaren Druckbegrenzungsventils (55) gesteuert oder geregelt wird.

11. Verfahren nach einem der vorhergehenden Ansprüche, **dadurch gekennzeichnet, dass** die Beaufschlagung der zweiten Kolbenfläche (44) mit dem Pneumatikdruck über ein 2/2-Wege-Magnetventil (56) erfolgt, dem ein 3/2-Wege-Magnetventil (57) nachgeordnet ist, wobei
a) zu Beginn der Betätigung des Bremsbetätigungsorgans (8) das 2/2-Wege-Magnetventil (56) und das 3/2-Wege-Magnetventil (57) in Ihre Durchlassstellungen geschaltet werden,
b) für das Erreichen einer definierten Betriebsstellung das 2/2-Wege-Magnetventil (56) in seine Sperrstellung und das 3/2-Wege-Magnetventil (57) in seine Durchlassstellung geschaltet werden und
c) für eine Übergabe auf eine rein hydraulische Beaufschlagung des Steuerelements (Relaiskolben 18) das 2/2-Wege-Magnetventil (56) in seine Sperrstellung und das 3/2-Wege-Magnetventil (57) in seine Entlüftungsstellung geschaltet werden.

12. Verfahren nach einem der vorhergehenden Ansprüche, **dadurch gekennzeichnet, dass** eine Beaufschlagung der zweiten Kolbenfläche (44) mit dem Pneumatikdruck herbeigeführt wird, um eine Veränderung des pneumatischen Bremsdrucks herbeizuführen, welcher sich allein anhand der Betätigung des Bremsbetätigungsorgans (8) und/oder des hydraulischen Bremsdrucks ergeben würde.

## Claims

1. Method for operating a brake device (1) of a hydraulically braked tractor (2) being coupleable with a pneumatically braked trailer with a hydraulically actuated trailer control valve (4) which is additionally pneumatically pilot controlled by a pneumatic pressure, **characterized by** controlling the absolute value and/or the course over time of the pneumatic pressure pilot controlling the trailer control valve during the driving state dependent on driving operating conditions, wherein in a pressure limiting valve (55) a piston (73) is actuated both by the pilot-controlling pneumatic pressure and by the pneumatic brake pressure controlled by the trailer control valve (4).

2. Method of claim 1 with
a) a brake actuation means (8) which is actuated for producing a hydraulic brake pressure for a hydraulic service brake (service brake cylinder 12; 14) of the tractor,
b) a trailer control valve (4), wherein a first piston surface (19) is actuated by a hydraulic brake pressure, wherein in the trailer control valve (4) after an excess of a response pressure in dependence on the actuation of the first piston surface (19) with the hydraulic brake pressure an inlet valve (35) is opened and a pneumatic brake pressure is produced at an outlet port (16) of the trailer control valve (4), wherein the pneumatic brake pressure is supplied to a coupling head brake (7) used for a coupling to the trailer,
c) a pneumatic valve (47) which with the actuation of the brake actuation means (8) but before reaching the response pressure is transferred into a valve state, wherein the pneumatic valve (47) transfers a pneumatic pressure to a second piston surface (44) of the trailer control valve (4), wherein by actuating the second piston surface (44) with the pneumatic pressure the inlet valve (35) is at least partially opened and at the outlet port (16) of the trailer control valve (4) already a pneumatic brake pressure is produced which is supplied to the coupling head brake (7) before the hydraulic brake pressure reaches the response pressure, wherein
d) during the drive state the amount of actuation of the second piston surface (44) with the pneumatic pressure is controlled dependent on driving operating conditions.

3. Method of claim 1 or 2, wherein the control during the driving state is provided under consideration of a signal which is dependent on an actuation of the brake actuation means and/or the pneumatic brake pressure.

4. Method of one of claims 1 to 3, wherein during the driving state a control of the duration of the pneumatic pressure depends on driving operating conditions.

5. Method of one of claims 1 to 4, wherein the control dependent on driving operating conditions is provided under consideration of
a) a comparison of the hydraulic brake pressure of the tractor (2) and the pneumatic brake pressure for the trailer controlled by the trailer control valve (4),
b) a comparison of the hydraulically produced brake force of the tractor (2) and the pneumatically produced brake force of the trailer,
c) information from an ABS- or EBS-unit,
d) information from a navigation system,
e) a coupling force or coupling distance between tractor (2) and trailer,
f) an actuation curve of the actuation of the brake actuation means (8) and/or
g) a velocity or acceleration signal.

6. Method of one of claims 1 to 5, wherein the actuation of the second piston surface (44) with the pneumatic pressure is automatically terminated when exceeding a termination criterion.

7. Method of claim 6, wherein the termination criterion considers
a) the course of the pneumatic and/or hydraulic brake pressure,
b) the course of the pneumatically caused brake force of the trailer and/or the hydraulically caused brake force of the tractor (2),
c) the time duration of the actuation of the brake actuation means (8),
d) a load of the tractor (2) and/or the trailer,
e) a coupling force or a coupling distance between the tractor (2) and trailer,
f) the actuation course of the actuation of the brake actuation means (8),
g) information from an ABS- or EBS-unit,
h) information from a navigation system and/or
h) a velocity or acceleration signal.

8. Method of one of claims 1 to 7, wherein by means of a pressure sensor (50) the pneumatic pressure actuating the second piston surface (44) is sensed.

9. Method of one of claims 1 to 8, wherein by means of a pressure sensor (50) a pneumatic brake pressure controlled by the trailer control valve (4) is sensed.

10. Method of one of claims 1 to 9, wherein the extent of the actuation of the second piston surface (44) with the pneumatic pressure is controlled under use of an adjustable pressure limiting valve (55).

11. Method of one of claims 1 to 10, wherein the actuation of the second piston surface (44) with the pneumatic pressure is provided via a 2/2-way-solenoid-valve (56) and a downstream 3/2-way-solenoidvalve (57), wherein
a) at the beginning of the actuation of the brake actuation means (8) the 2/2-way-solenoid-valve (56) and the 3/2-way-solenoid-valve (57) are switched into their open states,
b) when reaching a defined operating state the 2/2-way-solenoid-valve (56) is switched into a blocking state and the 3/2-way-solenoid-valve (57) is switched into its open state and
c) with a transfer to a purely hydraulic actuation of the control element (relay piston 18) the 2/2-way-solenoid-valve (56) is switched into its blocking state and the 3/2-way-solenoid-valve (57) is switched into its deaerating state.

12. Method of one of claims 1 to 11, wherein an actuation of the second piston surface (44) with the pneumatic pressure is provided for providing a change of the pneumatic brake pressure from the pneumatic brake pressure, which would result solely from the actuation of the brake actuation means (8) and/or from the hydraulic brake pressure.

## Revendications

1. Procédé de fonctionnement d'un dispositif de freinage (1) pour un véhicule de traction (2) freiné de manière hydraulique, lequel peut être couplé à une remorque à freinage pneumatique, comportant une soupape de commande de remorque (4) actionnée de manière hydraulique et précommandée en complément de manière pneumatique avec une pression pneumatique, **caractérisé en ce que**, pendant le roulage, le déroulement temporel et/ou la valeur de la pression pneumatique précommandant la soupape de commande de remorque sont commandés ou réglés en fonction des conditions de roulage, à l'occasion de quoi, dans une soupape de limitation de la pression (55), un piston de réglage (73) est alimenté à la fois en pression pneumatique précommandant, et en pression de freinage pneumatique modulée par la soupape de commande de remorque (4).

2. Procédé selon la revendication 1 comportant
a) un organe d'actionnement des freins (8), lequel est actionné pour la production d'une pression de freinage hydraulique pour un frein de service hydraulique (cylindre de freinage de service 12 ; 14) du véhicule de traction,
b) une soupape de commande de remorque (4), dans laquelle une première surface de piston (19) est alimentée en pression de freinage hydraulique, une soupape d'admission (35) étant ouverte dans la soupape de commande de remorque (4), après dépassement d'une pression de réponse, en fonction de l'alimentation de la première surface de piston (19) en pression de freinage hydraulique et une pression de freinage hydraulique étant générée sur un raccord de sortie (16) de la soupape de commande de remorque (4), pression de freinage pneumatique qui est conduite à une tête d'accouplement de frein (7) pour un accouplement à la remorque,
c) une soupape pneumatique (47), laquelle est amenée en position de soupape avec l'actionnement de l'organe d'actionnement des freins (8) avant toutefois que la pression de réponse ne soit atteinte, position dans laquelle la soupape pneumatique (47) transmet une pression pneumatique à une seconde surface de piston (44) de la soupape de commande de remorque (4), la soupape d'admission (35) étant ouverte au moins partiellement par l'alimentation de la seconde surface de piston (44) en pression pneumatique et une pression de freinage pneumatique étant déjà générée sur le raccord de sortie (16) de la soupape de commande de remorque (4), pression de freinage pneumatique qui est conduite à la tête d'accouplement de frein (7) avant que la pression de freinage hydraulique n'atteigne la pression de réponse,
d) le degré d'alimentation de la seconde surface de piston (44) en pression pneumatique étant commandé ou réglé pendant le roulage en fonction des conditions de roulage.

3. Procédé selon l'une des revendications précédentes, **caractérisé en ce que** la commande ou le réglage se fait pendant le roulage en tenant compte d'un signal, lequel dépend de l'actionnement de l'organe d'actionnement des freins et/ou de la pression de freinage pneumatique.

4. Procédé selon l'une des revendications précédentes, **caractérisé en ce qu'**une commande ou un réglage de la durée de la pression pneumatique, dépendants des conditions de roulage, se fait pendant le roulage.

5. Procédé selon l'une des revendications précédentes, **caractérisé en ce que** la commande ou le réglage, dépendants des conditions de roulage, se font en tenant compte
a) d'une comparaison de la pression de freinage hydraulique du véhicule de traction (2) et de la pression de freinage pneumatique modulée par la soupape de commande de remorque (4) pour la remorque,
b) d'une comparaison de la force de freinage du véhicule de traction (2) générée de manière hydraulique et de la force de freinage de la remorque générée de manière pneumatique,
c) d'informations issues d'une unité ABS ou EBS,
d) d'informations issues d'un système de navigation,
e) d'une force d'accouplement ou d'un trajet d'accouplement entre le véhicule de traction (2) et la remorque,
f) d'une évolution de l'actionnement de l'organe d'actionnement des freins (8) et/ou
g) d'un signal de vitesse ou d'accélération.

6. Procédé selon l'une des revendications précédentes, **caractérisé en ce que** l'alimentation de la seconde surface de piston (44) en pression pneumatique est coupée de manière automatisée lorsqu'un critère de fin est atteint.

7. Procédé selon la revendication 6, **caractérisé en ce que** le critère de fin tient compte
a) de l'évolution de la pression de freinage pneumatique et/ou de la pression de freinage hydraulique,
b) de l'évolution de la force de freinage de la remorque générée de manière pneumatique et/ou de la force de freinage du véhicule de traction (2) générée de manière hydraulique,
c) d'une durée d'actionnement de l'organe d'actionnement des freins (8),
d) d'un chargement du véhicule de traction (2) et/ou de la remorque,
e) d'une force d'accouplement ou d'un trajet d'accouplement entre le véhicule de traction (2) et la remorque,
f) de l'évolution de l'actionnement de l'organe d'actionnement des freins (8),
g) d'informations issues d'une unité ABS ou EBS,
h) d'informations issues d'un système de navigation et/ou
i) d'un signal de vitesse ou d'accélération.

8. Procédé selon l'une des revendications précédentes, **caractérisé en ce qu'**une pression pneumatique, alimentant la seconde surface de piston (44), est relevée par le biais d'un capteur de pression (50).

9. Procédé selon l'une des revendications précédentes, **caractérisé en ce qu'**une pression de freinage pneumatique, modulant la soupape de commande de remorque (4), est relevée par le biais d'un capteur de pression (50).

10. Procédé selon l'une des revendications précédentes, **caractérisé en ce que** le degré d'alimentation de la seconde surface de piston (44) en pression pneumatique est commandé ou réglé en utilisant une soupape de limitation de la pression réglable (55).

11. Procédé selon l'une des revendications précédentes, **caractérisé en ce que** l'alimentation de la seconde surface de piston (44) en pression pneumatique se fait par le biais d'une électrovanne 2/2 voies (56), en aval de laquelle on a placé une électrovanne 3/2 voies (57),
a) l'électrovanne magnétique 2/2 voies (56) et l'électrovanne 3/2 voies (57) étant commutées dans leurs positions d'admission au début de l'actionnement de l'organe d'actionnement des freins (8),
b) l'électrovanne 2/2 voies (56) étant commutée dans sa position de blocage et l'électrovanne 3/2 voies (57) dans sa position d'admission pour permettre d'atteindre une position de service définie et
c) l'électrovanne 2/2 voies (56) étant commutée dans sa position de blocage et l'électrovanne 3/2 voies (57) dans sa position de purge pour le passage à une alimentation purement hydraulique de l'élément de commande (piston de relais 18).

12. Procédé selon l'une des revendications précédentes, **caractérisé en ce qu'**on produit une alimentation de la seconde surface de piston (44) en pression pneumatique afin de générer une modification de la pression de freinage pneumatique, laquelle pourrait être obtenue à l'aide, seulement, de l'actionnement de l'organe d'actionnement des freins (8) et/ou de la pression de freinage hydraulique.
